# EUROPÄISCHE PATENTSCHRIFT

(11) **EP 4 450 544 B1**
(45) Veröffentlichungstag und Bekanntmachung des Hinweises auf die Patenterteilung: **10.12.2025**
(21) Anmeldenummer: 23168652.8
(22) Anmeldetag: 19.04.2023
(51) Int. Cl.: C08J 9/12, B29C 44/44, C08G 64/00, C08J 9/16, C08G 64/42

(54) **VERFAHREN ZUR HERSTELLUNG VON POLYCARBONAT-BEADS**
METHOD FOR PRODUCING POLYCARBONATE BEADS
PROCÉDÉ DE PRÉPARATION DE BILLES DE POLYCARBONATE

(43) Veröffentlichungstag der Anmeldung: 23.10.2024
(73) Patentinhaber: Covestro Deutschland AG, 51373 Leverkusen (DE)
(72) Erfinder: BRONOVA, Anna, 51373 Leverkusen (DE); HUNGERLAND, Tim, 51373 Leverkusen (DE); NOLTE, Marius, 51373 Leverkusen (DE)
(74) Vertreter: Levpat

(56) Entgegenhaltungen:
- EP-A1- 3 858 906
- WO-A1-2012/020112

## Beschreibung

Die Erfindung betrifft ein Verfahren zur Herstellung von Polycarbonat-Beads, die Polycarbonat-Beads, erhältlich durch das Verfahren, und aus den Polycarbonat-Beads erhältliche Formteile.

Partikelschäume, und hier insbesondere EPS, EPP und E-TPU, erlangen zunehmend an Bedeutung. Die heutige Technologie erlaubt es mittlerweile, Partikelschäume verlässlicher Qualität und aus diesen Partikelschäumen Bauteile mit vorteilhaften Eigenschaften herzustellen. Durch die geringere Schüttdichte gegenüber den "einfachen" Thermoplasten erschließen sich für die expandierten Materialien neue Anwendungsfelder bzw. herkömmliche Anwendungen lassen sich mit deutlichen Gewichtseinsparungen realisieren. Expandierte Thermoplasten sind somit insbesondere für Leichtbauanwendungen ein attraktives Material, sofern auch anwendungsspezifischen Eigenschaften hinreichend gut sind. Werkzeugentwicklungen in den letzten Jahren erlauben es, auch solche Bauteile herzustellen, deren Oberflächen eine solche Optik aufweisen, dass selbst Sichtteile aus expandierten Thermoplasten eine echte Alternative zu entsprechenden Spritzgussformteilen sind, während sie ein deutlich geringeres Gewicht aufweisen. Aufgrund des geringeren Materialverbrauchs sind die expandierten Materialien auch unter Nachhaltigkeitsgesichtspunkten attraktiv und können zudem aufgrund im Allgemeinen guter Wärmeisolationseigenschaften auch zu Energieeinsparungen beitragen, etwa bei der Verwendung als Wärmedämmmaterial oder als zusätzlichen Effekt bei der Verwendung als Dämmstoff zur Geräuschunterdrückung.

Auch Partikelschäume aus Polycarbonat wurden bereits beschrieben. Partikelschäume aus technischen Thermoplasten sind beispielsweise für die Automobilindustrie wegen Eigenschaften wie einer hohen Temperaturbeständigkeit und guten Brandverhaltens von Interesse. EPC ist ein Partikelschaum für Hochtemperaturanwendungen, bei denen herkömmliche Polymerschäume wie EPP versagen. DE 4100200 A1 beschreibt ein Verfahren zur Herstellung von Polycarbonatschaum aus Polycarbonat, bei welchem dem aromatischen Polycarbonat ein Umesterungskatalysator in Kombination mit aromatischen Polycarbonsäuren oder Wasser, ggf. zusammen mit aliphatischen Hydroxycarbonsäuren und/oder aliphatischen Alkoholen, zugesetzt wird. Es kommt dabei zu einem kontrollierten, partiellen Abbau des Polycarbonats unter Freisetzung von CO₂, was zum Verschäumen des restlichen Polycarbonats dient. Die in dem Dokument beschriebenen Polycarbonatschäume weisen Dichten um die 0,4 bis 0,8 g/cm³ auf.

Die EP 3858906 A1 offenbart ein Verfahren zur Herstellung expandierter Partikel aus aromatischem Polycarbonat durch Extrudieren von aromatischem Polycarbonat, Granulieren, Imprägnieren mit Kohlendioxid als Treibmittel und Expandieren der Partikel, gefolgt von der Formgebung der Partikel, um einen expandierten Formkörper zu erhalten.

EP 2603549 A1 beschreibt Polyesterschäume und rechnet diesen auch explizit Polycarbonatschäume zu, die neben einer geringen Dichte eine gute Verarbeitbarkeit aufweisen. Zur Herstellung dieser Partikelschäume wird ein Ausgangspolymermaterial gewählt, bei dem Kristallinität, widergespiegelt durch die Schmelzenthalpie, Glasübergangstemperatur und Schmelztemperatur in einem bestimmten Bereich liegen. Das Verfahren zur Herstellung der Partikelschäume umfasst das Bereitstellen entsprechender Ausgangspolymerkomponenten in geschmolzenem Zustand, das Einmischen einer Treibmittelkomponente und ggf. von einem oder mehreren Additiven in die Schmelze, die Extrusion und das Granulieren der treibmittelhaltigen Schmelze unter Wasser unter erhöhtem Druck von 1 bis 20 bar. EP 2603549 A1 beschreibt auch die grundsätzliche Möglichkeit, zur Stabilisierung des Extrusionsvorganges durch Erhöhung des Molekulargewichts beispielsweise Kettenverlängerer zuzugeben, wobei keine konkrete Mengenangabe erfolgt. Auch werden dort keine weiteren Anforderungen an das eingesetzte Polymer gestellt.

Aufgabe war es somit, gegenüber dem Stand der Technik verbesserte Polycarbonat-Beads mit geringer Dichte über einen kontinuierlichen Prozess bereitzustellen, aus denen sich Formteile mit besserer Mechanik herstellen lassen.

Überraschend wurde nun gefunden, dass Formteile aus Partikelschäumen aus Polycarbonat, aus sogenannten geschäumten "Polycarbonat-Beads", mit ausreichend guter Mechanik nur zugänglich sind, wenn ein Kettenverlängerer in einer bestimmten Menge mit Polycarbonat, das eine bestimmte Menge an OH-Endgruppen umfasst, zur Reaktion gebracht wird. Erst damit wird die für eine gute Mechanik erforderliche Prozessführung mit reaktiver Partikel-Schaumextrusion ermöglicht, so dass das Schäumen bei hohen Schmelzetemperaturen T von T₁ = (T_{g} + 110°C) bis T₂ = (T_{g} + 170°C) (mit T_{g} gleich der Glasübergangstemperatur der auf aromatischem Polycarbonat basierenden Zusammensetzung) über dem üblichen Temperaturbereich für die Schaumherstellung via Extrusion von Thermoplasten mit physikalischem Treibmittel zur Expansion zu niedrig-dichten Schäumen, und bei gleichzeitig hohen Drücken ablaufen kann. Unter einer "Partikel-Schaumextrusion" nach dem bisherigen Stand der Technik versteht der Fachmann einen vollständigen oder teilweisen Extrusionsprozess unter Zusatz von einem Treibgas mit abschließender Granulierung und Abkühlung zu expandierten Partikeln, im Falle von amorphen Thermoplasten bei Schmelzetemperaturen von T_{g} + 10 °C bis T_{g} + 70 °C mit T_{g} = der Glasübergangstemperatur des Polymermaterials.

Gegenstand der Erfindung ist daher ein Verfahren, insbesondere ein kontinuierliches Verfahren, zur Herstellung von Polycarbonat-Beads, umfassend die folgenden Schritte, bevorzugt in dieser Reihenfolge:
a) Bereitstellen einer auf aromatischem Polycarbonat basierenden Zusammensetzung, wobei das aromatische Polycarbonat, bezogen auf das Gesamtgewicht des aromatischen Polycarbonats, einen Gehalt an OH-Endgruppen von mindestens 350 ppm, bestimmt mittels ¹H-NMR-Spektroskopie mit Dichlormethan als Lösungsmittel bei Raumtemperatur, aufweist,
b) Vermischen der auf aromatischem Polycarbonat basierenden Zusammensetzung mit einem für OH-Gruppen geeigneten Kettenverlängerer in einem solchen molaren Verhältnis, dass auf 1 mol OH-Endgruppen des Polycarbonats 0,64 bis 1,10 mol der reaktiven Gruppe des Kettenverlängerers eingesetzt werden,
c) Bereitstellen der Mischung in plastifiziertem Zustand,
d) Einmischen eines physikalischen Treibmittels in die Schmelze,
e) Partikel-Schaumextrusion der plastifizierten Mischung bei einer Temperatur der plastifizierten Mischung T von T₁ = (T_{g} + 110°C) bis T₂ = (T_{g} + 170°C), wobei T_{g} die Glasübergangstemperatur der auf aromatischem Polycarbonat basierenden Zusammensetzung ist,
f) Granulierung der Treibmittel-haltigen Schmelze.

Durch die abschließende Granulierung werden geschäumte Polycarbonat-Beads erhalten.

Der Gehalt an OH-Endgruppen wird mittels ¹H-NMR-Spektroskopie mit Dichlormethan als Lösungsmittel bei Raumtemperatur unter Auswertung des Verhältnisses der Integrale der Signale bei 6,68 ppm (zwei aromatische Protonen ortho-ständig zu phenolischen OH-Gruppen) und bei 1,68 ppm (sechs Methylprotonen der Bisphenol-A Einheit) ermittelt.

Die Glasübergangstemperatur wird bestimmt nach DIN EN ISO 11357-1:2017.

"Bereitstellung der Mischung in plastifiziertem Zustand" bedeutet, dass eine Polymerschmelze vorliegt.

Soweit nicht ausdrücklich anders beschrieben, sind alle ppm-Mengen in der vorliegenden Erfindung als Gewichtsanteile zu verstehen.

Sowohl für die Menge der OH-Endgruppen als auch für die Konzentration an Kettenverlängerer gibt es einen Mindestwert, aber auch eine Höchstkonzentration für eine Schaumextrusion bei hohen Schmelzetemperaturen T von T₁ = (T_{g} + 110°C) bis T₂ = (T_{g} + 170°C), bevorzugt T von T₁ = (T_{g} + 120 °C) bis T₂ = (T_{g} + 160 °C), besonders bevorzugt im Bereich von T₁ = (T_{g} + 130 °C) bis T₂ = (T_{g} + 150 °C) zur Partikelschaumherstellung, um dabei einen Polycarbonatpartikelschaum mit guter Mechanik im Schüttdichtebereich 150 bis 250 g/L, bestimmt in Anlehnung an DIN EN ISO 60:2000-01, zu erhalten. "In Anlehnung" bedeutet hierbei, dass anstelle des normierten Alubehälters mit bekanntem Volumen ein 1 L Becherglas befüllt und sein Inhalt zur Dichtebestimmung des Materials ausgewogen wurde.

Die Zahl an OH-Gruppen des aromatischen Polycarbonats hat einen wesentlichen Einfluss darauf, ob Beads mit einer geringen Dichte und guter Mechanik der resultierenden Formteile erhalten werden können. Zu viele OH-Gruppen im Polycarbonat bedeuten eine zu hohe Reaktivität des Polycarbonats, was letztlich zu Umlagerungsreaktionen der Polycarbonatkette, einem Molekulargewichtsabbau aufgrund des zu schnellen Verzweigungsaufbaus mit damit verbundener zu rascher Viskositätserhöhung (zu hoher Schereintrag) und zu Vergilbung führt. Zu wenig OH-Gruppen im Polycarbonat führen jedoch dazu, dass die Reaktion mit dem Kettenverlängerer nicht ausreichend ist oder gar nicht erst abläuft. Dieses bedeutet jedoch ebenfalls, dass kein guter Partikelschaum mit ausreichender Mechanik erhalten wird. Vielmehr weist der Partikelschaum dann eine Vielzahl defekter, kollabierter Zellen auf.

Der OH-Endgruppengehalt des im Verfahren eingesetzten aromatischen Polycarbonats beträgt erfindungsgemäß mindestens 350 ppm, bevorzugt 350 ppm bis 600 ppm, weiter bevorzugt 380 ppm bis 580 ppm, besonders bevorzugt 400 ppm bis 550 ppm, ganz besonders bevorzugt 450 bis 550 ppm, bezogen auf das Gesamtgewicht an eingesetztem aromatischem Polycarbonat. Bezugsgröße ist hierbei das reine aromatische Polycarbonat, nicht die auf aromatischem Polycarbonat basierende Zusammensetzung. Um einen solchen Endgruppengehalt zu erreichen, werden bevorzugt mehr als 70 Gew.-% SPC, bezogen auf das Gesamtgewicht des eingesetzten aromatischen Polycarbonats, eingesetzt, weiter bevorzugt mindestens 80 Gew.-% SPC, bezogen auf das Gesamtgewicht des eingesetzten aromatischen Polycarbonats, ganz besonders bevorzugt wird ausschließlich SPC als aromatisches Polycarbonat für die Herstellung der Polycarbonat-Beads eingesetzt.

Auch die Konzentration des Kettenverlängerers ist wesentlich. Zu viel Kettenverlängerer führt aufgrund resultierender zu hoher Viskositäten bedingt durch zu starken Molekulargewichtsaufbau des Polycarbonats zu einer Nicht-Verarbeitbarkeit des Materials. Zu wenig Kettenverlängerer bewirkt keinen signifikanten Molekulargewichtsaufbau und somit einen nur unzureichenden Druckaufbau (Viskosität von PC ohne/mit unzureichend CE bei 300 °C ist zu niedrig) und letztlich eine schlechtere Mechanik, wobei die Reaktion des Kettenverlängerers mit dem Polycarbonat eine Funktion von Zeit und Temperatur ist. Der Schaumextrusionsprozess bei Bisphenol-A basiertem Homopolycarbonat erfolgt beispielsweise bevorzugt bei einer Gehäusetemperatur von T_{Gehäuse} von T_{1Gehäuse} = T_{g} + 100 °C bis T_{2Gehäuse} = T_{g} + 150 °C und einer Schmelzetemperatur T von ca. T_{g} + (110 bis 170 °C) nach Treibmitteleinmischung und -lösung. Eine Partikelschaumherstellung ohne Kühlung resultiert in kollabierten Partikeln mit hoher Dichte. Je nach Prozessführung führen die Stabilisierung und das Erstarren der Schaumstruktur über Kühlung dazu, dass die Schaumexpansion zu schnell unterbunden ist. Die hohen Temperaturen im Prozess ermöglichen, das vollständige Schäumpotential der Rezeptur unter Kühlung auszunutzen, indem das zu schnelle Abkühlen/ Erstarren kompensiert wird. Bei diesen Temperaturprofilen beträgt aber der Druck an der Lochplatte ohne Kettenverlängerer 80 - 90 bar (trotz Schmelzepumpe). Der Einsatz von Kettenverlängerern erhöht den Druck an der Lochplatte auf 140 - 180 bar, bevorzugt 150 - 160 bar. Ohne entsprechende Kettenverlängerung und damit ohne die zusätzliche Viskositätserhöhung ist die Partikelschaumherstellung bei diesen Prozessbedingungen (Temperaturen) nicht möglich.

Damit Polycarbonat-Beads mit guten Eigenschaften resultieren, hat es sich als erfindungswesentlich herausgestellt, dass ein molares Verhältnis (bei einem kontinuierlichen Verfahren erfolgt eine durchsatzbezogene Zudosierung) von 1 mol OH-Endgruppen des Polycarbonats zu 0,64 - 1,10 mol, bevorzugt 0,71 bis 1,0 mol, weiter bevorzugt bis 0,96 mol, noch weiter bevorzugt 0,8 bis 0,9 mol, insbesondere 0,82 bis 0,90 mol der reaktiven Gruppe des Kettenverlängerers eingesetzt wird.

Vorzugsweise, sofern der Gehalt des aromatischen Polycarbonats an OH-Endgruppen 400 bis 550 ppm, bestimmt mittels ¹H-NMR-Spektroskopie mit Dichlormethan als Lösungsmittel bei Raumtemperatur, beträgt, werden auf 1 mol OH-Endgruppen des Polycarbonats 0,71 bis 0,96 mol der reaktiven Gruppe des Kettenverlängerers eingesetzt.

Durch den Einsatz eines Kettenverlängerers kommt es zu einem Molmassenaufbau des Polycarbonats hin zu einem Bereich von 40 000 bis 230 000 g/mol, bevorzugt bis 100 000 g/mol, womit ein zusätzlicher Druckaufbau an der Lochplatte von etwa 60 bis 100 bar bei den Temperaturen, in dem Polycarbonat in plastifiziertem Zustand vorliegt, verbunden ist.

In einer erfindungsgemäß besonders bevorzugten Ausführungsform wird das Verfahren kontinuierlich durchgeführt und umfasst die folgenden Schritte, bevorzugt in dieser Reihenfolge:
a) Bereitstellen einer auf aromatischem Polycarbonat basierenden Zusammensetzung, wobei das aromatische Polycarbonat, bezogen auf das Gesamtgewicht des aromatischen Polycarbonats, einen Gehalt an OH-Endgruppen von mindestens 350 ppm, bevorzugt von 400 bis 550 ppm, bestimmt mittels ¹H-NMR-Spektroskopie mit Dichlormethan als Lösungsmittel bei Raumtemperatur, aufweist,
b) Vermischen der auf aromatischem Polycarbonat basierenden Zusammensetzung mit einem für OH-Gruppen geeigneten Kettenverlängerer in einer Menge, dass auf 1 mol OH-Endgruppen des Polycarbonats 0,64 bis 1,10 mol, bevorzugt 0,71 bis 1,0 mol, weiter bevorzugt bis 0,96 mol, noch weiter bevorzugt 0,8 bis 0,9 mol, insbesondere 0,82 bis 0,90 mol der reaktiven Gruppe des Kettenverlängerers (durchsatzbezogen eingestellt) eingesetzt werden, wobei als Kettenverlängerer ein epoxyfunktionalisierter Kettenverlängerer eingesetzt wird, bevorzugt ein Epoxy-Reaktivgruppen umfassendes Styrol-Acryl basiertes Polymer, insbesondere eines mit einem Epoxy-Äquivalentgewicht (EEW = Epoxy Equivalent Weight) von 285 bis 485 g/mol, bestimmt nach DIN EN 1877-1:2000.
c) Bereitstellen der Mischung in plastifiziertem Zustand,
d) Einmischen eines physikalischen Treibmittels in die Schmelze in einer Konzentration von 0,1 - 2,3 Gew.-%, bezogen auf die Polymerschmelze, wobei das physikalische Treibmittel Stickstoff, Kohlenstoffdioxid oder eine Mischung aus diesen, bevorzugt Kohlenstoffdioxid, ist,
e) Partikel-Schaumextrusion der plastifizierten Mischung bei einer Schmelztemperatur T von T₁ = (T_{g} + 110°C) bis T₂ = (T_{g} + 170°C), bevorzugt bei T von T₁ = (T_{g} + 120 °C) bis T₂ = (T_{g} + 160 °C), wobei T_{g} die Glasübergangstemperatur der auf aromatischem Polycarbonat basierenden Zusammensetzung ist,
f) Granulierung der Treibmittel-haltigen Schmelze, bevorzugt als Unter-Wasser-Granulierung ohne Druckbeaufschlagung.

Die einzelnen Schritte des erfindungsgemäßen Verfahrens können unter Verwendung der dem Fachmann bekannten und in der Kunststofftechnik verfügbaren Werkzeuge und Maschinen ausgeführt werden. Dabei können auch ggf. einzelne Schritte kombiniert durchgeführt werden.

Das Verfahren zur Herstellung der Polycarbonat-Beads kann kontinuierlich oder diskontinuierlich durchgeführt werden. Die Polymerschmelze kann z.B. direkt als frisch polymerisiertes Material dem Polymerisationsreaktor entnommen oder von diesem direkt in einen Mischextruder, in dem letztlich Kettenverlängerer, Treibmittel und ggf. Additive an verschiedenen Stellen geführt werden, geleitet werden. Bevorzugt wird das erfindungsgemäße Verfahren als kontinuierliches Verfahren durchgeführt, denn bei einer diskontinuierlichen Verfahrensführung besteht das Risiko, dass das Polycarbonat auskristallisiert.

Es versteht sich, dass die anspruchsgemäßen Vorgaben hinsichtlich des Verhältnisses der Stoffmengen an OH-Endgruppen des Polycarbonats und der reaktiven Gruppe des Kettenverlängerers der Verfahrensführung entsprechend einzustellen ist. Bei einem kontinuierlichen Verfahren erfolgt zweckmäßigerweise eine Durchsatz-bezogene Konzentrationseinstellung (Relation mol/h : mol/h).

Das erfindungsgemäße Verfahren kann ein einstufiges oder auch ein zweistufiges Extrusionsverfahren sein, in welchem in einem ersten Extrusionsschritt der Molekulargewichtsaufbau des Polymers in Anwesenheit des Kettenverlängerers erfolgt und Polycarbonat-Granulat als erstes Produkt erhalten wird und dann in einem zweiten Extrusionsschritt das Aufschäumen mit dem physikalischen Treibmittel, vorzugsweise Kohlenstoffdioxid, erfolgt, wobei das Ergebnis der sich anschließenden Unterwassergranulation schließlich die erfindungsgemäßen Polycarbonat-Beads sind. Zum Abschluss der ersten Extrusionsstufe kann dann eine Granulierung erfolgen. Hierzu wird die Schmelze durch ein Formwerkzeug an einer Austrittsöffnung des Extruders extrudiert und dann abgelängt. Das Ablängen geschieht durch eine Schneidvorrichtung, welche üblicherweise dem Formwerkzeug, durch welches das Material extrudiert wird, unmittelbar nachgeschaltet ist. Dabei kann die Schneidvorrichtung am Formwerkzeug auf Kontakt anliegen oder in einem gewissen Abstand zu dem Formwerkzeug angeordnet sein. Ebenso kann aber auch die nachfolgende Treibmitteleinmischung in dem gleichen Extruder erfolgen, entweder erst nach einer gewissen Verweilzeit der Mischung aus Polycarbonat und Chain Extender, oder aber auch gleichzeitig mit der Zuführung des Chain Extenders.

Durch das erfindungsgemäße Verfahren lassen sich Polycarbonat-Beads, ein Partikelschaum, erhalten. Die Anwendung von partikelverschäumtem Polycarbonat ermöglicht es, aufgrund des geringen Gewichts und der schlagzähen Eigenschaften des Materials, verbunden mit höheren Dauergebrauchstemperaturen (Beständigkeit bspw. im KTL-Lackierprozess) im Vergleich zu PP, ABS, PE oder PA6, das Gewicht einiger Fahrzeugkomponenten signifikant zu reduzieren sowie den Kraftstoffverbrauch und die CO₂-Emissionen zu senken, während die mechanischen Eigenschaften auch bei höherer Temperatur erhalten bleiben. Darüber hinaus ist zu erwarten, dass die Verfügbarkeit von verschäumtem Polycarbonat eine ganze Reihe weiterer Anwendungsbereiche zu erschließen vermag, vor allem überall dort, wo Isolationsaufgaben bei höheren Temperaturen gefragt sind.

Gegenstand der Erfindung sind somit auch Polycarbonat-Beads, herstellt nach dem erfindungsgemäßen Verfahren. Unter einem "Bead" werden erfindungsgemäß geschäumte Granulatkörner (= Partikelschaum) verstanden, die üblicherweise eine Höchstdichte von maximal 50% des ungeschäumten Ausgangsmaterials (der auf aromatischem Polycarbonat basierenden Zusammensetzung) aufweisen. Die durch das erfindungsgemäße Verfahren erhältlichen Polycarbonat-Beads weisen bevorzugt einen Molmassenmittelwert, hier als absolute Molmasse gemessen, des aromatischen Polycarbonats von mindestens 140 kDa (hochverzweigt), besonders bevorzugt mindestens 150 kDa, bestimmt mittels GPC-MALLS-Messung (Multi-angle-laser-lightscattering) nach DIN EN ISO 16014-5:2019-09, auf. Dabei werden gleichzeitig die Molmassen wie auch die molekularen Dimensionen der Moleküle bestimmt und daraus Aussagen über die Verzweigungsgrade der Materialien getroffen, da die Verzweigungen den Trennmechanismus der GPC beeinflussen, was durch die ansteigende Molmassenkurve sichtbar wird. Es wird das lineare Ausgangsmaterial als Referenz zum Vergleich mit den geschäumten Proben verglichen. Je verzweigter (kleineres hydrodynamisches Volumen bei der gleichen Molmasse) die Probe ist, desto weiter weicht die Kurve von der idealen Linie eines unverzweigten Polycarbonats ab. Polycarbonat-Material, welches einen entsprechenden Mindest-Verzweigungsgrad aufweist, lässt sich gut verschäumen, führt entsprechend zu Polycarbonat-Beads mit guter Morphologie, aus welchen sich dann Formteile mit guter Mechanik herstellen lassen.

Die Partikel aus expandiertem Polycarbonat, die "Polycarbonat-Beads", hergestellt nach dem erfindungsgemäßen Verfahren, weisen folgende Eigenschaften auf:
- eine Schüttdichte, je nach kontinuierlicher Prozessführung, von 150 g/L bis 250 g/L, bevorzugt 180 g/L bis 200 g/L, im Prozess über die Schüttdichte bestimmt in Anlehnung an DIN EN ISO60:1999. "In Anlehnung" bedeutet hierbei, dass anstelle des normierten Alubehälters mit bekanntem Volumen ein 1 L Becherglas befüllt und sein Inhalt zur Dichtebestimmung des Materials ausgewogen wurde.
- einen nominalen Durchmesser (je nach Prozess) im Bereich von 2 bis 7 mm, bevorzugt von 2,5 bis 5 mm, besonders bevorzugt von 3 mm ± 0,2 mm, wobei die exakte Bestimmung der Größenverteilung bevorzugt über einen Camsizer erfolgt;
- die thermischen Eigenschaften (T_{g} von 145-150 °C) und mechanischen Eigenschaften von Polycarbonat, z.B. bei einer Bauteildichte von 200 kg/m³ von mindestens einem Biegemodul von 70 MPa, einer Biegefestigkeit von 2,5 MPa (ISO 6603-2:2000); einem Druckmodul von 59 MPa und einer Druckfestigkeit (bei 10% Kompression) von 1,73 MPa (ISO 844-11:2014); einer Zugfestigkeit von mindestens 1,97 MPa und einer Bruchdehnung von 8 - 14 % (ISO 1926:2009);
- einen mittleren Äquivalentkreisdurchmesser der Zellen zum projektionsflächengleichen Kreis von maximal 150 µm, bevorzugt von maximal 100 µm, besonders bevorzugt von maximal 80 µm, bestimmt mittels REM (ASTM E1508-12a:2019).

Die Größe der Beads hängt von der Prozessführung ab und lässt sich u.a. durch die gewählte Düsengröße, Durchsatz, Messergeschwindigkeit und Komposition der treibmittelhaltigen Schmelze beeinflussen. Eine beispielhafte Prozessführung mit einer Düsengröße von 1,2 mm liefert Beads mit einem nominalen Durchmesser im Bereich von 1,8 bis 3 mm. Das Maximum der Häufigkeitsverteilung liegt bei 2,5 mm mit einer Verteilungsbreite von 28%, bezogen auf den Mittelwert. Bei einer Düse von 2,2 mm wird eine Teilchengrößeverteilung mit einem durchschnittlichen Durchmesser von 5 mm und eine Verteilungsbreite von 40%, bezogen auf den Mittelwert, erhalten.

Die Polycarbonat-Beads sind in einem breiten Bereich verschweißbar, bevorzugt bei einem Wasserdampfdruck von 7 bar bis 11 bar, besonders bevorzugt 8 bar bis 10 bar. Sie weisen ein hohes Molekulargewicht M_{w} im Bereich von 40 000 g/mol bis hin zu 230 000 g/mol auf, bestimmbar mittels GPC, wie im Beispielteil beschrieben.

Die Polycarbonat-Beads zeigen gute mechanische Eigenschaften und eine niedrige Wärmeleitfähigkeit (DIN EN 12667:2001) im Bereich von 45 - 47 mW/(m*K) bei 10 °C und einer Bauteildichte von 200 ± 10 kg/m³.

Die Beads weisen intakte ("geschlossenzellige") oder zumindest überwiegend intakte Zellen auf, weshalb sich aus den Polycarbonat-Beads Schaumstoff-Formteile mit sehr gleichmäßigen, ebenen Oberflächen und homogener Verschweißung der Beads herstellen lassen. "Überwiegend" bedeutet hierbei, dass bevorzugt > 85 % der Zellen, weiter bevorzugt > 90 % der Zellen eines Beads intakt sind, d.h. bei diesen Beads wird die einzelne Zellstruktur von mindestens drei weiteren Strukturelementen (Zellen) geteilt und es liegen nicht mehr als zwei kaputte Zellwände pro einzelne Zelle vor.

Das Ausgangsmaterial für die Herstellung der erfindungsgemäßen Beads in dem erfindungsgemäßen Verfahren ist eine auf aromatischem Polycarbonat basierende Zusammensetzung.

Unter "aromatischem Polycarbonat" im erfindungsgemäßen Sinne werden sowohl aromatische Homopolycarbonate als auch aromatische Copolycarbonate verstanden. Dabei können die Polycarbonate in bekannter Weise linear oder verzweigt sein.

Die Herstellung der Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich. Erfindungsgemäß bevorzugt wird Polycarbonat eingesetzt, dass nach dem Schmelzepolymerisationsverfahren, auch "Umesterungsverfahren" genannt, hergestellt wurde. Erfindungsgemäß eingesetztes Polycarbonat weist 350 bis 600 ppm OH-Endgruppen auf, wobei sich diese Angabe auf das Polycarbonat als solches, auf das Polymer selbst, ohne ggf. zugesetzte Additive, bezieht. Die Menge der OH-Endgruppen bezieht sich auf das gesamt eingesetzte Polycarbonat. Es kann auch eine Mischung aus Polycarbonat, das mittels Schmelzepolymerisation erhalten wurde, und solchem, das mittels Grenzflächenverfahren erhalten wurde, eingesetzt werden, solange sich die Konzentration der OH-Endgruppen des eingesetzten Polycarbonats insgesamt im angegebenen Bereich bewegt. Besonders bevorzugt wird aber nur Polycarbonat, das mittels Schmelzepolymerisationsverfahren hergestellt wurde, eingesetzt.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 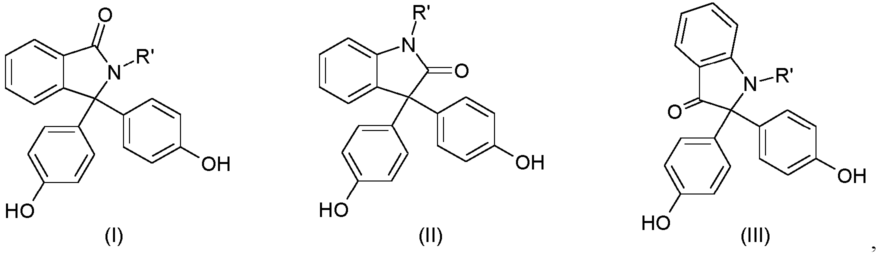 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Isooctylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, die Copolycarbonate auf Basis von 1,1-Bis-(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (I), (II) und (III) 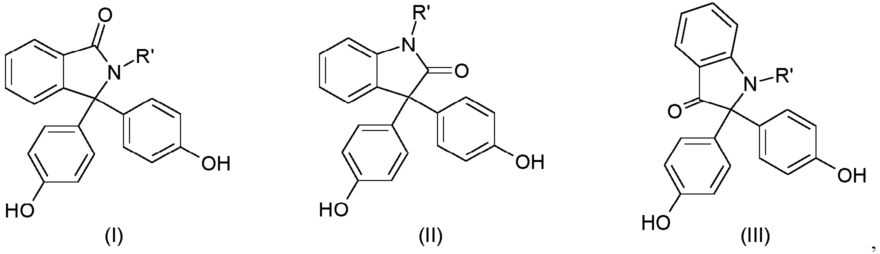 in denen R' jeweils für C₁- bis C₄-Alkyl, Aralkyl oder Aryl, bevorzugt für Methyl oder Phenyl, ganz besonders bevorzugt für Methyl, steht,

abgeleitete Homo- oder Copolycarbonate, insbesondere mit Bisphenol A. Ganz besonders bevorzugt enthalten die auf Polycarbonat basierenden Zusammensetzungen Bisphenol A basiertes Polycarbonat, äußerst bevorzugt ist das Polycarbonat in den auf Polycarbonat basierenden Zusammensetzungen Bisphenol A-basiertes Homopolycarbonat.

Bevorzugt sind auch Copolycarbonate, zu deren Herstellung Diphenole der allgemeinen Formel (1a) eingesetzt wurden: 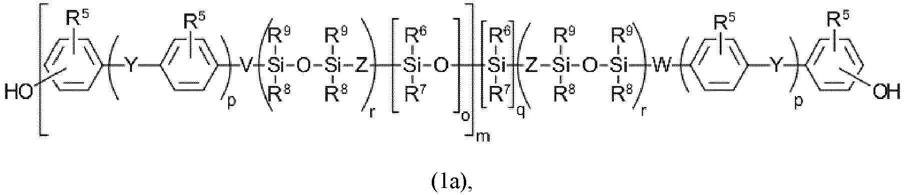 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SO₂-, -S-, -CO-, -O-, C₁- bis C₆-Alkylen, C₂- bis C₅-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁-bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht,
o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (1a) über Terephthalsäure und/oder Isophthalsäure miteinander unter Ausbildung von Estergruppen verknüpft sind.

Insbesondere bevorzugt sind (Poly)Siloxane der Formeln (2) und (3) 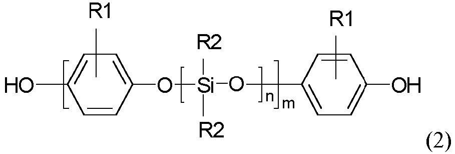 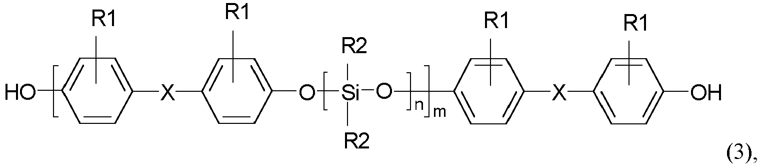
wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SO₂-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 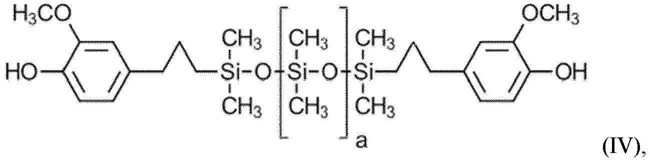 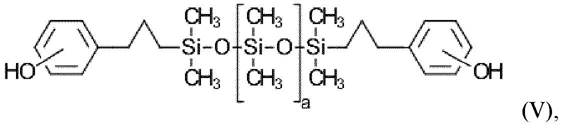 bevorzugt (Va) 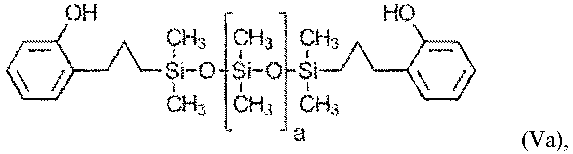 oder 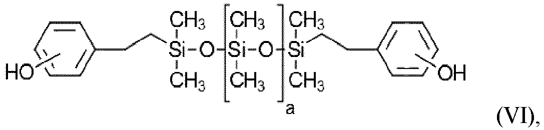 wobei a in Formel (IV), (V) und (VI) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (IV), (V) oder (VI) über Terephthalsäure und/oder Isophthalsäure miteinander unter Ausbildung von Estergruppen verknüpft sind.

Ebenso ist es bevorzugt, wenn in der Formel (1a) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Copolycarbonate mit Monomereinheiten der Formel (1a) und insbesondere auch deren Herstellung sind in der WO 2015/052106 A2 beschrieben.

Copolycarbonate mit Monomereinheiten der Formel (IV) und insbesondere auch deren Herstellung sind in der WO 2015/052106 A2 beschrieben.

Bei dem im erfindungsgemäßen Verfahren eingesetzten aromatischen Polycarbonat kann es sich um ein Polycarbonat, aber auch um eine Mischung aus zwei oder mehr aromatischen Polycarbonaten handeln, solange der Gehalt an OH-Endgruppen des gesamten eingesetzten Polycarbonats im erfindungsgemäßen Bereich liegt. Es kann auch solches Polycarbonat eingesetzt werden, das ein Post Consumer oder Post Industrial Rezyklat ist. Entsprechende Rezyklate können als Granulat oder Mahlgut dem Extruder zugeführt werden. Es ist auch möglich, Rezyklat nur als einen Teil des aromatischen Polycarbonats einzusetzen.

Dem aromatischen Polycarbonat können grundsätzlich ein oder mehrere Additiv(e) zugesetzt sein, und zwar bereits dem Polycarbonat, wie es als Ausgangsmaterial in dem erfindungsgemäßen Verfahren eingesetzt wird. Ein oder mehrere Additive können jedoch auch erst während der Durchführung des erfindungsgemäßen Verfahrens im Extruder dem aromatischen Polycarbonat zugeführt werden, und zwar bevorzugt zusammen mit dem Kettenverlängerer. Eine Einmischung über den Seitenextruder ist im erfindungsgemäßen Verfahren nicht möglich, sofern nur eine Extrusionsstufe verwendet wird, da das Treibmittel in der Schmelze vorliegt und dementsprechend über die Seitenbeschickung austreten würde. Eine gasdichte Seitenbeschickung würde aber das Einbringen der Additive auf diese Art ermöglichen. Additive können auch mittels Pulvervormischungen oder als Masterbatch eingebracht werden. Flüssige Additive können grundsätzlich an jeder Stelle des Verfahrens injiziert werden, solange noch eine ausreichende Homogenisierung erfolgen kann, bevorzugt im Bereich statischer oder dynamischer Mischaggregate. Additive können auch in einer ersten Stufe zugegeben werden und das Treibmittel dann in einer zweiten. Hier lassen sich die Additive dann auch über einen Seitenextruder zudosieren.

Die Mischung aus aromatischem Polycarbonat, ggf. Blendpartnern und ggf. Additiven als Startmaterial wird als "auf aromatischem Polycarbonat basierende Zusammensetzung" bezeichnet. Der Einsatz von einer auf "aromatischem Polycarbonat basierenden Zusammensetzung" in Verfahrensschritt a ist somit als Einsatz des reinen Polymers, aber auch als Einsatz von additiviertem aromatischen Polycarbonat zu verstehen. Sofern eine additivierte Polycarbonat-Zusammensetzung eingesetzt wird, enthält diese bevorzugt mindestens 70 Gew.-%, weiter bevorzugt mindestens 80 Gew.-%, noch weiter bevorzugt mindestens 90 Gew.-%, besonders bevorzugt mindestens 95 Gew.-%, ganz besonders bevorzugt mindestens 98 Gew.-% aromatisches Polycarbonat, bezogen auf das Gesamtgewicht der Polycarbonat-Zusammensetzung. Äußerst bevorzugt enthält die "auf aromatischem Polycarbonat-basierende Zusammensetzung" keine Blendpartner zu dem Polycarbonat, sondern in dem erfindungsgemäßen Verfahren zur Herstellung von Polycarbonat-Beads kommt, außer ggf. für Polycarbonat üblichen Additiven, nur aromatisches Polycarbonat zum Einsatz.

Solche weiteren Additive, wie sie üblicherweise Polycarbonaten zugesetzt werden, sind insbesondere Thermostabilisatoren, Flammschutzmittel, Antioxidantien, Entformungsmittel, Antitropfmittel, etwa Polytetrafluorethylen (Teflon) oder SAN-gekapseltes PTFE (z.B. Blendex 449), UV-Absorber, IR-Absorber, Schlagzähmodifikatoren, Antistatika, optische Aufheller, Füllstoffe wie Talk, Lichtstreumittel, Umesterungsinhibitoren, Verträglichkeitsvermittler, Nukleierungsmittel, Farbmittel, Pigmente, z.B. Titandioxid, Ruß, chemische Treibmittel und/oder Additive zur Lasermarkierung, insbesondere in den für Polycarbonat-basierte Zusammensetzungen üblichen Mengen. Derartige Additive sind beispielsweise in EP-A 0 839 623, WO-A 96/15102, EP-A 0 500 496 oder im "Plastics Additives Handbook", Hans Zweifel, 5th Edition 2000, Hanser Verlag, München beschrieben. Diese Additive können einzeln oder auch im Gemisch zugesetzt werden. Es versteht sich, dass nur solche Additive und nur in solchen Mengen zugesetzt werden dürfen, wenn sie sich nicht signifikant negativ auf die Herstellung der Beads nach dem erfindungsgemäßen Verfahren auswirken.

Bevorzugt sind die Additive ausgewählt aus der Gruppe der Thermostabilisatoren, Flammschutzmittel, Antioxidantien, Entformungsmittel, Farbmittel, Pigmente, Antitropfmittel, UV-Absorber, IR-Absorber, Nukleierungsmittel, Schlagzähmodifikatoren, Antistatika, optischen Aufheller, Lichtstreumittel, Umesterungsinhibitoren, Verträglichkeitsvermittler und/oder Additive zur Lasermarkierung.

Die auf aromatischem Polycarbonat basierende Zusammensetzung weist bevorzugt eine Schmelzevolumenfließrate MVR von bis zu 14 cm³/(10 min), weiter bevorzugt bis zu 12 cm³/(10 min), besonders bevorzugt von 5 cm³/(10 min) bis 9 cm³/(10 min), ganz besonders bevorzugt von 5,5 cm³/(10 min) bis 6,5 cm³/(10 min), bestimmt nach ISO 1133:2012-3 (Prüftemperatur 300°C, Masse 1,2 kg), auf.

Dem eingesetzten aromatischen Polycarbonat wird als Teil des erfindungsgemäßen Verfahrens so viel Kettenverlängerer zugesetzt, dass das molare Verhältnis der OH-Endgruppen des Polycarbonats 1 zu 0,64 bis 1,1, bevorzugt zu 0,71 bis 1,0, weiter bevorzugt bis 0,96, noch weiter bevorzugt 0,8 bis 0,9, insbesondere 0,82 bis 0,90 der reaktiven Gruppen des Kettenverlängerers beträgt. Hierbei erfolgt die Einstellung der Stoffmenge bevorzugt bezogen auf den Durchsatz pro Stunde. Hierdurch erfolgt ein Polymeraufbau, das Molekulargewicht des aromatischen Polycarbonats wird durch die Ausbildung von Langkettenverzweigungen erhöht.

Als Kettenverlängerer sind grundsätzlich Amine, Carboxylverbindungen, Maleinsäureanhydridmodifizierte Verbindungen, epoxyfunktionalisierte Verbindungen, Oxazoline, Carbodiimide und/oder funktionalisierte Polymere, etwa auf Acrylat- und/oder Styrolbasis, geeignet, die entsprechende funktionelle Gruppe aufweisen. Derartige Verbindungen können alleine oder im Gemisch eingesetzt werden. Solche Gruppen sind beispielsweise Aminfunktionen bei den Aminen, Carboxylfunktionen bei den Carboxyverbindungen, Anhydridfunktionen bei Maleinsäureanhydridmodifizierten Verbindungen, Epoxyfunktionen bei epoxyfunktionalisierten Verbindungen oder auch sonstige Funktionen, die mit den OH-Endgruppen des Polycarbonats so reagieren können, dass ein Kettenaufbau erfolgt. Bevorzugt sind als Kettenverlängerer insbesondere epoxyfunktionalisierte Verbindungen, äußerst bevorzugt epoxyfunktionalisierte Styrol-Acryl basierte Polymere, welche z.B. von der BASF SE als Joncryl-Additive, z.B. Joncryl ADR 4368, ADR 4400, ADR 4468 angeboten werden. Die Menge / Einwaage an Kettenverlängerer muss dem aromatischen Polycarbonat angepasst werden, sodass auf 1 mol OH-Endgruppen des Polycarbonats 0,64 bis 1,10 mol, bevorzugt 0,71 bis 1,0 mol, weiter bevorzugt bis 0,96 mol, noch weiter bevorzugt 0,8 bis 0,9 mol, insbesondere 0,82 bis 0,90 mol der reaktiven Gruppe des Kettenverlängerers eingesetzt werden.

Ausgehend beispielsweise von einem aromatischen Polycarbonat mit 350 - 600 ppm OH-Endgruppen, umgesetzt mit einem Kettenverlängerer mit einem Epoxy-Äquivalentgewicht von 310 g/mol, z.B. mit Joncryl ADR 4468, in Konzentrationen von 0,4 - 1,2 Gew.-%, bevorzugt 0,5 - 1,0 Gew.-%, besonders bevorzugt in Konzentrationen von 0,7 - 0,9 Gew.-%, wobei die Menge an Kettenverlängerer auf die resultierende Gesamtzusammensetzung (auf aromatischem Polycarbonat basierende Zusammensetzung, d.h. inkl. ggf. Blendpartner und ggf. Additive, plus Kettenverlängerer) bezogen wird, können die Bereiche der Reaktivgruppenverhältnisse erreicht werden. Durch gezieltes Einstellen des molaren Verhältnisses von 1 mol zu 0,64 bis 1,10 mol werden Molekulargewichtsbereiche von 40.000 bis 230.000 g/mol, bevorzugt 50.000 bis 150.000 g/mol, besonders bevorzugt 75.000 bis 100.000 g/mol, bestimmt wie beschrieben, erzielt. Das breite Verarbeitungsfenster ermöglicht es, Bauteile aus Partikeln mit Molekulargewichten zwischen 40.000 bis 230.000 g/mol mit unterschiedlichen Eigenschaften herzustellen.

Zur Durchführung der reaktiven Partikel-Schaumextrusion können folgende Aufbau-Anordnungen zum Einsatz kommen, ohne darauf beschränkt zu sein:
a) Polymerisationsreaktor/ (statischer) Extruder/ Mischer/ Gasdosierung/ Schmelzepumpe/ Granulierung
b) Extruder (Doppel/Einschnecke)/ Gasdosierung/ Granulator
c) Extruder (Doppel/Einschnecke)/ Gasdosierung/ Statische Mischer/ Granulator
d) Extruder (Doppel/Einschnecke)/ Gasdosierung/ Wärmetauscher/ Granulator
e) Extruder (Doppel/Einschnecke)/ Gasdosierung/ Statische Mischer/ Wärmetauscher/ Granulator
f) Doppelschneckenextruder/ Gasdosierung/ Einschneckenextruder/ Granulator
g) Doppelschneckenextruder/ Gasdosierung/ Wärmetauscher/ Granulator
h) Doppelschneckenextruder/ Gasdosierung/ Einschneckenextruder/ Schmelzepumpe/ Granulator i) Doppelschneckenextruder/ Gasdosierung/ Wärmetauscher/ Schmelzepumpe/ Granulator.

Der Extrusionsprozess kann ein- oder zweistufig durchgeführt werden.

Im Detail kann der Prozess in verschiedenen Anordnungen realisiert werden. Wichtige Schritte des Prozesses sind: Aufschmelzen der auf aromatischem Polycarbonat basierenden Zusammensetzung, ggf. Zusatz von Nukleierungsmitteln (Talk, insbesondere Nano-Talkum, Graphit, Ruß, Pigmente und etc.), Zudosierung des Treibmittels über Flüssigdosierungen (z.B. der Firma Lewa GmbH aus Deutschland) oder Verdichtungsaggregate (Hochdruckaggregate) (z.B. der Frima Maximator GmbH aus Deutschland), ggf. Druckaufbau bis zur Lochplatte über z.B. Kühlung, Zugabe von reaktiven Makromonomeren oder über technische Hilfsmittel wie Breaker-Plates oder Schmelzepumpen (bevorzugt wird der Druckaufbau durch Zugabe von reaktiven Makromonomeren oder über Nutzung von technischen Hilfsmittel erreicht), und zuletzt die Abschlagung des Granulats/Beads über eine Granulierung in flüssigem Medium, Heißabschlag oder eine Unter-Gas-Granulierung, wobei auch Gasmischungen eingesetzt werden können. Zu beachten ist, dass hierbei als flüssiges Medium nicht nur das Medium Wasser eingesetzt werden kann, sondern auch ein alternatives Medium wie Glycerin oder Glycerol.

Besonders bevorzugt wird zur Durchführung des erfindungsgemäßen Verfahrens ein Tandemaufbau aus einer Doppelschnecke und Einschnecke verwendet. Dabei wird weiter bevorzugt die Doppelschnecke zur Plastifizierung der auf aromatischem Polycarbonat basierenden Zusammensetzung und zur Einmischung des physikalischen Treibmittels sowie des Kettenverlängerers verwendet und die Einschnecke im Anschluss zur Schmelzetemperierung. Der Molekulargewichtsaufbau erfolgt dabei bereits in der Doppelschnecke / im ersten Extruder und läuft bis zum Austritt aus der Düse (Ende der Extrusionsanlage) weiter.

Die Zudosierung des physikalischen Treibmittels zu der Schmelze, enthaltend das aromatische Polycarbonat und den währendes des Gesamtprozesses reagierenden Kettenverlängerer, erfolgt besonders bevorzugt im letzten Drittel der ersten Extrusionseinheit (je nach Aufbau). Die Durchmischung erfolgt dabei vorzugsweise so, dass die Polymerschmelze das Treibmittel schließlich in homogener Verteilung enthält, wobei der Anteil des physikalischen Treibmittels in der Mischung für CO₂ bevorzugt 1,0 bis 2,3 Gew.-%, weiter bevorzugt 1,2 bis 1,7 Gew.-%, besonders bevorzugt 1,3 - 1,5 Gew.-%, für N₂ bevorzugt 0,1 bis 0,5 Gew.-%, weiter bevorzugt 0,1 bis 0,3 Gew.-%, besonders bevorzugt 0,15 bis 0,25 Gew.-% und ganz besonders bevorzugt 0,15 bis 0,2 Gew.-% , bezogen auf das Gesamtgewicht an Polymerschmelze (= Polycarbonat-basierte Zusammensetzung) mit Kettenverlängerer, beträgt. Es ist zu beachten, dass das erfindungsgemäße Verfahren nicht verlangt, dass Schritt d nach Schritt b erfolgt. Es ist ebenso möglich, dass das Einmischen des physikalischen Treibmittels in die Schmelze gleichzeitig beginnend oder zeitlich überlappend mit der Zudosierung des Kettenverlängerers erfolgt.

Bevorzugt werden zur Initiierung der Schaumzellbildung für eine feinere und homogenere Zellmorphologie Nukleierungsmittel wie Talk, insbesondere Nano-Talkum, Graphit, Ruß, Pigmente und etc. in geringen Konzentrationen von 0,1 bis 1,0 Gew.-%, weiter bevorzugt 0,15 bis 0,5 Gew.-%, besonders bevorzugt in Konzentrationen von 0,2 bis 0,3 Gew.-% zugesetzt, wobei sich die Mengenangaben auf die resultierende Gesamtzusammensetzung aus Polycarbonat-basierter Zusammensetzung und Kettenverlängerer beziehen.

Als physikalisches Treibmittel können grundsätzlich alle für die Schäumung von Thermoplasten gebräuchlichen Treibmittel verwendet werden. Beispiele sind hier Propan, Butan, n-Pentan, isoPentan, aber auch ähnliche aliphatische Kohlenwasserstoffe, auch aromatische Kohlenwasserstoffe, alizyklische Kohlenwasserstoffe, aliphatische Alkohole, Kohlenstoffdioxid, Stickstoff, Luft, Inertgase wie Argon oder Helium, und weitere. Es können auch Kombinationen aus zwei oder mehr dieser Treibmittel als physikalisches Treibmittel eingesetzt werden. Bevorzugt werden Kohlenstoffdioxid, ein oder mehrere Inertgase, Stickstoff, Luft oder deren Mischungen als physikalische Treibmittel eingesetzt, da diese nicht nur toxikologisch und ökologisch unbedenklich sind, sondern auch nicht brandfördernd wirken. Ganz besonders bevorzugt ist Stickstoff, Kohlenstoffdioxid oder ein Gemisch aus diesen, äußerst bevorzugt Kohlenstoffdioxid.

Sofern Stickstoff als physikalisches Treibmittel eingesetzt wird, werden bevorzugt 0,1 bis 0,5 Gew.-%, weiter bevorzugt 0,1 bis 0,3 Gew.-%, besonders bevorzugt 0,15 bis 0,25 Gew.-% und ganz besonders bevorzugt 0,15 bis 0,2 Gew.-% Stickstoff, bezogen auf die Polymerschmelze inklusive Kettenverlängerer und Additive (d.h. Polycarbonat-basierte Zusammensetzung plus Kettenverlängerer), eingesetzt.

Sofern Kohlenstoffdioxid als physikalisches Treibmittel eingesetzt wird, werden bevorzugt 1,0 bis 2,3 Gew.-%, weiter bevorzugt 1,2 bis 1,7 Gew.-%, besonders bevorzugt 1,3 - 1,5 Gew.-% Kohlenstoffdioxid, bezogen auf die Polymerschmelze inklusive Kettenverlängerer und Additive, eingesetzt.

Beim Herstellungsprozess, hier am Beispiel einer Tandemanlage Aufbau h), können verschiedene physikalische Treibmittel an verschiedenen Stellen in die Polymerschmelze eingebracht werden, etwa mittels Flüssigdosierung oder Hochdruckdosierung. Bevorzugt erfolgt eine Zugabe von physikalischen Treibgasen in den ersten Extruder, jedoch in das letzte Drittel der Extruders für eine möglichst gute Homogenisierung. Eine Dosierung am Ende der Tandemanlage würde ebenfalls Partikel ermöglichen, der Prozess wäre jedoch instabiler und die resultierenden Partikel inhomogen. Am meisten bevorzugt wird das Treibmittel Kohlenstoffdioxid eingesetzt, da es im Vergleich zu den anderen Treibmitteln, die bei der Herstellung von expandierten Thermoplasten verwendet werden, den Vorteil aufweist, nicht brennbar zu sein und zudem gegenüber den Inertgasen und Stickstoff kostengünstiger verfügbar ist. Des Weiteren lässt es sich vergleichsweise leicht in den superkritischen Zustand überführen (T > 31,0 °C und p > 73,8 bar), was die Mischbarkeit und Lösung in Polycarbonat durch geringe Kompressibilität und schnelle Diffusivität fördert. Die erfindungsgemäßen Polycarbonat-Beads können bei der Verwendung von Kohlenstoffdioxid als Treibmittel in dem erfindungsgemäßen Herstellungsverfahren somit auch ohne Bedenken für Bauteile verwendet werden, die bei Anwendungen zum Einsatz kommen, die eine gewisse Brandgefahr beinhalten oder nicht ausgasen dürfen (Interieur). Insbesondere sind somit auch Anwendungen im Bereich E-Mobilität, etwa als Karosseriebauteile, z.B. für Verbundteile, denkbar. Hierbei sind insbesondere Geräuschdämmungselemente, die in den Fußbodenbereich des Fahrzeugs integriert werden, oder Isolierschichten in der Karosserie mögliche Anwendungen.

Der Schmelzedruck ist so zu wählen, dass er oberhalb des kritischen Lösungsdrucks des physikalischen Treibmittels liegt.

Die Extrusion der Schmelze an der Austrittsöffnung des Extruders durch eine Düsenplatte erfolgt nach Treibmitteleinmischung und -lösung in der Regel mit einer Temperatur der Schmelze T von T₁ = (T_{g} + 110 °C) bis T₂ = (T_{g} + 170 °C), bevorzugt von T₁ = (T_{g} + 120 °C) bis T₂ = (Tg + 160 °C), besonders bevorzugt im Bereich von T₁ = (T_{g} + 130 °C) bis T₂ = (T_{g} + 150 °C). Dabei wird die Temperatur der Düsenplatte zudem bevorzugt auf eine Temperatur von T_{g} + (130 bis 150 °C) eingestellt, um ein Einfrieren der Düse durch abkühlende Polymerschmelze zu verhindern und somit die fließende Polymergranulierung sicherzustellen, sowie eine entsprechende Schaumexpansion mit möglichst hohem Expansionspotential zu erreichen.

Der Durchmesser der Düsenöffnung für eine Einzelloch-Düse liegt vorzugsweise im Bereich von 0,8 bis 2,2 mm, bevorzugt 1,0 bis 1,5 mm. Für Multi-Loch-Düsen sind Düsendurchmesser von 0,4 bis 0,8 mm bevorzugt, besonders bevorzugt von 0,6 mm.

Die Granulierung der Schmelze zum Abschluss des erfindungsgemäßen Verfahrens erfolgt bevorzugt durch Unterwassergranulation und weiter bevorzugt ohne zusätzliche Druckbeaufschlagung., d.h. bei Atmosphärendruck. Durch die Granulierung bei Atmosphärendruck lassen sich die gewünschten niedrigen Dichten der Polycarbonats-Beads erzielen. Mit dem Austritt der Schmelze aus der Düse erfährt das Polycarbonat-Material einen Druckabfall von 140 bis 180 bar, bevorzugt von 150 - 160 bar, auf den Atmosphärendruck von etwa 1 bar, womit das Material anfängt, aufzuschäumen. Das physikalische Treibmittel, beispielsweise Kohlenstoffdioxid, bläht das Polycarbonat-Material auf, während das Gas aus der Polymerschmelze ausdiffundiert. Nach einer gewissen Zeit hat ein vollständiger oder nahezu vollständiger Gasaustausch stattgefunden, so dass in dem dann granulierten, expandierten Polycarbonat, den Polycarbonat-Beads, nur noch die normale Luftzusammensetzung zu finden ist.

Gegenstand der Erfindung ist außerdem ein Verfahren zur Herstellung von Formteilen aus den Polycarbonat-Beads, welche nach dem erfindungsgemäßen Verfahren hergestellt wurden, und ebensolche Formteile.

Die Polycarbonat-Beads können durch Befüllen entsprechender Kavitäten in Formteile, auch in solche mit komplexen Geometrien, überführt werden, wobei letztlich nur ein entsprechender Arbeitsschritt erforderlich ist. Das spätere, von Extrusionsschaumstoffen bekannte, häufig noch erforderliche Zuschneiden mit entsprechender Abfallbildung durch Verschnitt entfällt. Polycarbonat-Beads lassen sich zudem besser transportieren als die oftmals sperrigen Platten von verfügbaren Extrusionsschaumstoffen.

Entsprechende erfindungsgemäße Formteile können in der Automobilindustrie, im Transportwesen, in der Bauindustrie, der Luftfahrindustrie, der Raumfahrtindustrie, in der Verpackungsindustrie und generell im Leichtbau und/oder Verbundbau zur Anwendung kommen. Mögliche Formteile aus den Polycarbonat-Beads sind dabei nicht nur Platten, sondern auch komplexe, dreidimensional geformte Teile.

Formteile bestehend aus den bzw. umfassend die erfindungsgemäßen Polycarbonat-Beads sind insbesondere Sichtteile in verschiedenen Anwendungsfeldern, wobei auch eine Veredelung mit Lasertexturen möglich ist, etwa Armaturenbretter oder Innenraumverkleidungselemente, Schallschutzelemente, Einschäumungselemente, z.B. in Teppichen des Fußraumes beim Auto, ein Kernmaterial oder tragendes Schaumstoffteil von Verbundwerkstoffen, etwa für die Karosseriedämmung für Fahrzeuge, insbesondere E-Fahrzeuge, im Bereich HVAC (Heizung, Klima, Lüftung) als Isoliermaterial, als Hochtemperaturisolierung in Industrie, der Haus- und Gebäudetechnik oder im Transportwesen, Dämm-, Isoliermaterialien, Verpackungen, Leichtbauelemente, Rotorblätter von Windkraftanlagen, Fassadenbauteile.

Im Allgemeinen werden Formteile aus Polymerschäumen vorwiegend auf Druck belastet. Eine weitere relevante Belastungsart für Polymerschäume ist die Biegung. Hierbei wird das Bauteil komplex belastet, indem die obere Seite einer Druckbelastung ausgesetzt wird und die Unterseite auf Zug belastet wird. Druckversuche ermöglichen eine Aussage über die anwendungsrelevante mechanische Performance, sowie Zug - und Biegeversuche über die Verschweißqualität. Die Bauteile aus den durch das erfindungsgemäße Verfahren erhaltenen Polycarbonat-Beads können ein thermo-mechanisches (T_{g} von 145 - 150 °C) Profil von Polycarbonat aufweisen, z. B. bei einer Bauteildichte von 200 kg/m³ von einem Biegemodul von 59,1 ± 11,4 MPa, einer Biegefestigkeit von 2,2 ± 0,3MPa (bei 23°C, ISO 1209-1:2007, modifizierte Geometrie auf 120 x 25 x 10 mm³); Druckmodul von 54,7 ± 5MPa und einer Druckfestigkeit (bei 10% Kompression) von 1,61 ± 0,12 MPa (bei 23°C, DIN EN ISO 844-11:2014); einer Zugfestigkeit von mindestens 1,97 MPa und einer Bruchdehnung von 8,4% (DIN EN ISO 1926:2009) bei gleichzeitiger guter Isolationswirkung von 45,2 ± 2 mW/(m K) bei 10°C (EN ISO 8301-8:1991). Der handelsübliche Partikelschaum EPP weist bei gleicher Dichte 200 kg/m³ ungefähr ein Biegemodul von 56,1 ± 10,8 MPa, eine Biegefestigkeit von 1,85 ± 0,25 MPa, einen Druckmodul von 48,4 ± 3,6MPa und eine Druckfestigkeit (bei 10% Kompression) von 1,51 ± 0,5MPa auf. Zudem besitzt EPP eine Zugfestigkeit von 2,49 MPa und eine Bruchdehnung von 20,2% bei gleichzeitiger Isolationswirkung von 54 ± 0,2 mW/(m*K) (10 °C), wobei die Bestimmung dieser Werte wie oben für das EPC beschrieben erfolgt, eine auffällige geringere Performance.

Wegen der teilweise auch recht großen Polycarbonat-Beads mit mittleren, zu einem projektionsgleichen Kreis Äquivalentdurchmessern, also nominalen Durchmessern, von etwa 4 bis 6 mm ist es allerdings erforderlich, die Kavität im Werkzeug volumenbezogen 10 - 20% zu überfüllen. Das dampfbasierte Verschweißverfahren für Partikelschäume läuft für alle Partikel nach demselben Mechanismus ab und ist ausführlich in der Literatur, etwa in Raps et al. 2015; DOI: 10.1016/j.polymer.2014.10.078, beschrieben.

Zur Herstellung von Formteilen/Bauteilen werden Schaumpartikel miteinander in einem Wasserdampf-Formteilautomat oder variotherm (thermisch durch Heizen) verschweißt. Beim Wasserdampf-Formteilautomat wird die Partikeloberfläche angeschmolzen oder erweicht unter Verwendung von Hochdruck-Wasserdampf (d.h. Wasserdampf bei hoher Temperatur), was zu einer Interdiffusion von Polymerketten zwischen verschiedenen Perlen und resultierender Kohäsion der Perlen führt. Eine gute Kohäsion zwischen den Partikeln und ein geringer Anteil an Makroporen/Zwickel, d.h. Hohlräumen zwischen Partikeln im Bauteil aufgrund schlechter Packung sind notwendig, um günstige mechanische Eigenschaften zu gewährleisten. Die Verarbeitung von Schaumperlen zum Fertigteil erfolgt in einem Formteilautomaten in fünf Schritten: 1) Vollständiges oder teilweises Schließen der Form, 2) Füllen der Form mit ggf. anschließendem vollständigem Schließen, 3) Verschweißen der Partikel, 4) Kühlung und Stabilisierung, 5) Auswerfen des Formteils. Dabei werden zwei Verfahren unterschieden: Die Crackspaltmethode und die Druckfüllmethode. Bei der Druckfüllmethode wird das Werkzeug zunächst geschlossen, dann die Partikel durch Luftdruck aus einem Behälter gezogen und von einem Injektor mit ca. 3 bar in die Form geblasen und dort komprimiert. Die Partikel entspannen sich in der Form und füllen die Kavitäten besser aus (entspricht einer Überfüllung von ungefähr 10% bei der Crackspaltmethode). Bei der Crackspaltmethode wird das Werkzeug nicht vollständig geschlossen, sondern ein gewisser Spalt (%) bleibt noch offen. Dann erfolgt die Befüllung mit Partikeln, sodass das Werkzeug zu einem gewissen %-Satz überfüllt (10 - 20 Volumen-% bei EPC) wird. Danach wird das Werkzeug geschlossen und die Partikel werden auf Zieldicke komprimiert.. Bei einer Zieldicke des Bauteils von beispielsweise 20 mm wird die Werkzeugkavität zum Befüllen z.B. 4 mm weiter geöffnet (= 20 Vol.-%), mit den Polycarbonat-Beads befüllt und anschließend wird das Werkzeug auf eine Bauteildicke von 20 mm zusammengefahren. Dieser Schritt ist entscheidend, um eine homogene Verteilung der Perlen in der Form zu erreichen. Im dritten Schritt werden die Perlen durch Heißdampf, der durch die Form nach einem festen Ablauf strömt, miteinander verschmolzen. Während der Bedampfung bilden die Perlen aufgrund der Interdiffusion von Polymerketten benachbarter Partikel physikalische Verbindungen. Um eine hohe Verschweißqualität zwischen den Partikeln zu gewährleisten, sind für EPC bevorzugt 7 bis 11 bar, besonders bevorzugt 8 bis 10 bar anzuwenden. Im Dampf-basierten Verschweißprozess wird zuerst die Luft zwischen den Perlen ausgespült und die Form vorgewärmt. Dabei strömt Dampf parallel zum Werkzeug bei geöffneten Ventilen ein. Im zweiten Schritt durchströmt der Dampf die Form, was als Querdämpfung bezeichnet wird. Während dieses Schrittes sind die einander gegenüberliegenden Dampf-Zu- und -austrittsventile geöffnet. Um eine möglichst homogene Temperaturverteilung und eine gleichmäßige Verschweißqualität im gesamten Teil zu gewährleisten, wird das Werkzeug vorzugsweise von beiden Seiten bedampft. Abschließend wird bei geschlossenen Auslassventilen Dampf bei bestimmten Druck in die Dampfkammer geleitet, um die Oberflächenqualität durch die Bildung einer Haut zu verbessern (Autoklavbedampfung). Im vierten Schritt wird das Formteil gekühlt, was entscheidend ist für die Maßhaltigkeit. Wird das Teil ohne Kühlung ausgeworfen, ist eine weitere Ausdehnung der Partikel möglich, was zu einer Abweichung vom Originalmaß führt. Zum Abkühlen wird die Form mit Wasser besprüht, bis eine Temperatur von ca. 80 °C erreicht ist. Nach dem Formen und Abkühlen wird das Teil schließlich im letzten Schritt ausgeworfen, bevorzugt durch Druckluft und mechanische Auswerfer.

Die Erfindung ist anhand der nachfolgenden Abbildungen illustriert.

Es zeigen:

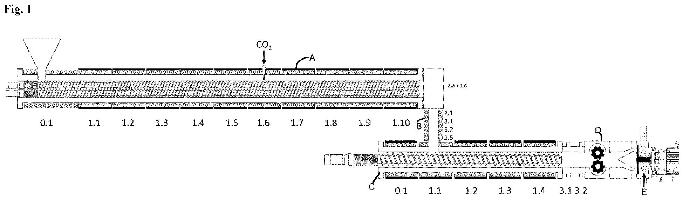

Fig. 1: Fließbild des erfindungsgemäßen Verfahrens zur Herstellung von Polycarbonat-Beads.

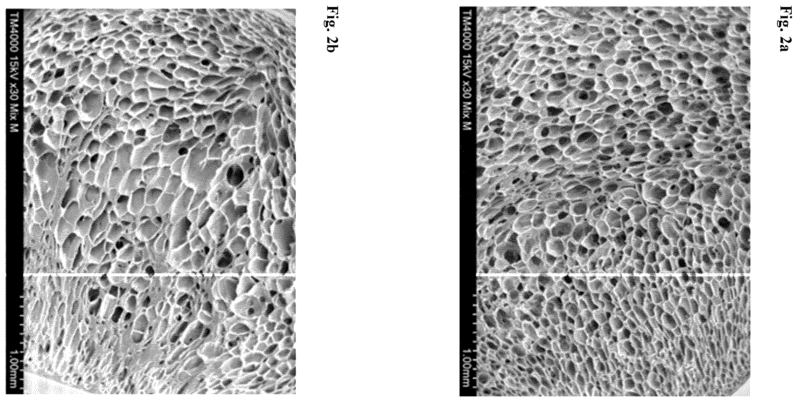

Fig. 2a: REM-Aufnahme der Schaummorphologie eines durch das erfindungsgemäße Verfahren erhältlichen Polycarbonat-Beads (molares Reaktivgruppenverhältnis OH : Epoxy von 1 mol: 0,82 mol für eine PC 1-Komponente mit einem OH-Endgruppen Gehalt von 470 ppm (E1)). Der OH-Endgruppengehalt, bezogen auf das Gesamtgewicht des eingesetzten aromatischen Polycarbonats, betrug 470 ppm.
Fig. 2b: REM-Aufnahme der Schaummorphologie eines weiteren durch das erfindungsgemäße Verfahren erhältlichen Polycarbonat-Beads (molares Reaktivgruppenverhältnis OH : Epoxy von 1 mol: 0,90 mol (bezogen auf den Durchsatz pro Stunde) für eine PC 1-Komponente mit einem OH-Endgruppen Gehalt von 470 ppm (E2)). Der OH-Endgruppengehalt, bezogen auf das Gesamtgewicht des eingesetzten aromatischen Polycarbonats, betrug 429 ppm.

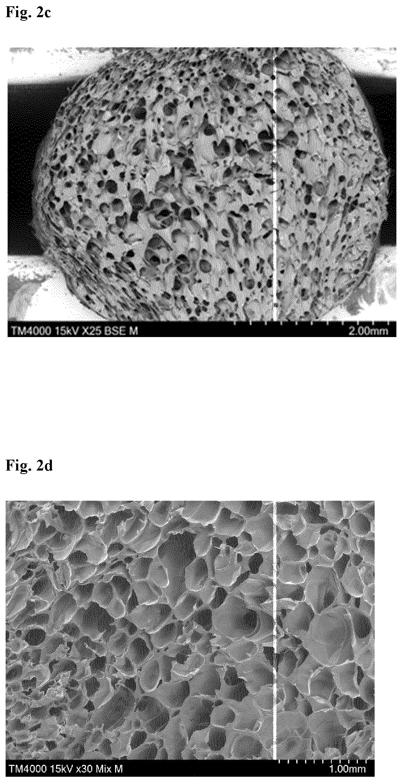

Fig. 2c: REM-Aufnahme der Schaummorphologie eines nicht erfindungsgemäßen Polycarbonat-Beads (molares Reaktivgruppenverhältnis OH : Epoxy von 1 mol: 1,12 mol (bezogen auf den Durchsatz pro Stunde) für eine PC 1-Komponente mit einem OH-Endgruppen Gehalt von 470 ppm (V4)). Der OH-Endgruppengehalt, bezogen auf das Gesamtgewicht des eingesetzten aromatischen Polycarbonats, betrug 346 ppm.
Fig. 2d: REM-Aufnahme der Schaummorphologie eines weiteren nicht erfindungsgemäßen Polycarbonat-Beads (molares Reaktivgruppenverhältnis OH : Epoxy von 1 mol: 1,47 mol (bezogen auf den Durchsatz pro Stunde) für eine PC 1-Komponente mit einem OH-Endgruppen Gehalt von 470 ppm (V6)). Der OH-Endgruppengehalt, bezogen auf das Gesamtgewicht des eingesetzten aromatischen Polycarbonats, betrug 264 ppm.

Die in Figur 1 dargestellte Anlage zur Durchführung des erfindungsgemäßen Verfahrens ist ein Tandemaufbau. Dieser besteht zunächst aus einem gleichläufigen Doppelschneckenextruder (A). Die Schnecken sind dabei für den Schäumprozess optimiert (z.B. zwei linksdrehende Elementen für Gasdichtigkeit Richtung Einzug). Der Doppelschneckenextruder verfügt in der beispielhaften Darstellung über 10 beheizte Zonen mit entsprechender Temperaturkontrolle und Druckerfassung, wobei die Gasdosierung in diesem Beispiel an der Position 1.6 erfolgt. Nach der Homogenisierung der Schmelze wird diese via dem Bypass (B) in die Einschnecke (C) zwangsgefördert. Der Einschneckenextruder besitzt hier 4 beheizbare Zonen mit entsprechender Temperaturkontrolle und Drucksensorik. Das Gas-Schmelzegemisch wird primär bis zur Schmelzepumpe hin gefördert und in diesem Prozess bei gleicher Temperatur gehalten. Die anschließende Schmelzepumpe (D) hat die Aufgabe, einen Rückstaudruck in die vorgeschaltete Anlage zu generieren (bessere Gaslöslichkeit) und den Druck vor der Lochplatte zu kontrollieren. Die homogenisierte Schmelze wird durch die Lochplatte gedrückt, schäumt auf und wird von einem rotierenden Messer abgetrennt und vom Wasserkreislauf abtransportiert (E) (getrocknet und ausgeschieden).

Die Figuren 2a bis 2d zeigen REM-Aufnahmen von Morphologien verschiedener Polycarbonat-Beads, die nach den Verfahrensschritten des erfindungsgemäßen Verfahrens hergestellt wurden, allerdings bei unterschiedlichem molaren Verhältnissen OH-Endgruppen des Polycarbonats : Epoxygruppen des Kettenverlängerers ("OH zu Epoxy"). Während bei der Herstellung der Beads aus den Figuren 2a und 2b aromatisches Polycarbonat eingesetzt wurde, bei welchem das molare Verhältnis OH : Epoxy im erfindungsgemäßen Bereich liegt, gilt das nicht für die Materialien aus den Figuren 2c und 2d. Hier betrug das molare Verhältnis OH : Epoxy der eingesetzten Rezeptur 1 : 1,12 bzw. 1,47. Deutlich ist bei diesen Vergleichs-Beads die teilweise zerstörte Zellmorphologie sowie Zellkoaleszenz erkennbar. Es resultiert ein Material, das sich nicht zu Formteilen mit guten mechanischen Eigenschaften verarbeiten lässt. Die erfindungsgemäßen Polycarbonat-Beads jedoch, hergestellt nach dem erfindungsgemäßen Verfahren, weisen weitestgehend intakte Schaumzellen auf, wobei sich die Qualität der Schaumstruktur im besonders bevorzugten Bereich der Reaktivgruppenäquivalente der Rezeptur deutlich verbessert.

### Beispiele

### 1. Beschreibung der Rohstoffe und Prüfmethoden

### a) Rohstoffe

### Polymere:

PC1: Ein aromatisches Polycarbonat auf Basis von Bisphenol A mit einer MVR von 6 cm³/(10 min) (300°C/1,2 kg, ISO 1133-1:2011) und einer Erweichungstemperatur (VST/B 120; ISO 306:2013) von 149°C. T_{g}, bestimmt nach DIN EN ISO 11357-1:2017: 148°C. M_{w}, bestimmt wie nachfolgend beschrieben, ca. 30.900 g/mol bei 28 kDA (MALLS). Enthaltend 0,06% Thermostabilisator und 0,1% UV-Stabilisator. OH-Endgruppengehalt, bestimmt mittels ¹H-NMR-Spektroskopie mit Dichlormethan als Lösungsmittel bei Raumtemperatur (wie vorstehend beschrieben): 470 ppm. Hergestellt über das Verfahren der Schmelzkondensation (SPC).

**PC2:** Ein aromatisches Polycarbonat auf Basis von Bisphenol A mit einer MVR von 6 cm³/(10 min) (300°C/1,2 kg, ISO 1133-1:2011) und einer Erweichungstemperatur (VST/B 120; ISO 306:2013) von 150°C. T_{g}, bestimmt nach DIN EN ISO 11357-1:2017: 148°C. M_{w}, bestimmt wie nachfolgend beschrieben, ca. 30.900 g/mol bei 28 kDA (MALLS). OH-Endgruppengehalt, bestimmt mittels ¹H-NMR-Spektroskopie mit Dichlormethan als Lösungsmittel bei Raumtemperatur (wie vorstehend beschrieben): 60 ppm.

Hergestellt über das Verfahren der Grenzflächenkondensation (LPC).

**Kettenverlängerer 1:** Ein kommerziell erhältlicher und multifunktionaler Kettenverlängerer der BASF SE (Joncryl ADR 4468) auf Basis von Epoxy-Reaktivgruppen umfassendem Styrol-Acryl basiertem Polymer mit einem mittleren Molekulargewicht (Gelpermeationschromatographie in ortho-Dichlorbenzol bei 150 °C mit Polystyrolkalibrierung) M_{w} = 7.250 g/mol, einem Epoxy-Äquivalentgewicht von 310 g/mol, bestimmt nach DIN EN 1877-1:2000-12, einer Glasübergangstemperatur T_{g} von 59 °C und einer Zersetzungstemperatur von 350°C, bestimmt nach DIN EN ISO 11357-1:2017.

### b) Durchführung des Verfahrens für die Beispiele

Die Durchführung des erfindungsgemäßen Verfahrens kann grundsätzlich über verschiedene maschinelle Setups, wie bereits vorher beschrieben, erfolgen. Die nachfolgend beschriebenen Versuche wurden anhand des Aufbaus i), ii), iii) Doppelschneckenextruder-Gasdosierung-Einschneckenextruder-Schmelzepumpe-Unterwassergranulierung, auch gezeigt in Figur 1, durchgeführt. Beispiel i) beschreibt eine erfolgreiche Partikelherstellung im Anspruchsbereich, Beispiel ii) beschreibt eine, durch Überschreitung der Kettenverlängerer-Maximalkonzentration, fehlgeschlagene Partikelherstellung, Beispiel iii) beschreibt eine fehlgeschlagene Partikelherstellung durch Abwesenheit der Reaktivkomponente, Beispiel iv) beschreibt eine Versuchsreihe mit gleichem Aufbau und Prozessparametern wie in i) jedoch mit sukzessiver Reduzierung der OH-Konzentration der Schmelze (ppm) PCs bei konstanter Reaktivkomponente und Beispiel v) beschreibt eine erfolgreiche Partikelherstellung anhand eines alternativen Aufbaus Doppelschneckenextruder-Statischer Mischer / Wärmetauscher-Schmelzepumpe-Unterwassergranulierung.
i) Eine Doppelschnecke der Firma Reifenhäuser (Troisdorf, Deutschland) mit 43 D wurde mit einem Durchsatz von 35 kg/h, bei Profiltemperaturen von 100 - 160 °C (Positionen 1 bis 3), 240 °C (Position 4) bis 280 °C (Position 5 - 10) und einer Drehzahl von 100 rpm gefahren. Zur PC1-Schmelze wurde zusätzlich der Kettenverlängerer 1 in geringer Konzentration von 0,7 Gew.-% zugesetzt. Das entspricht einem molaren Verhältnis OH : Epoxy von 1 : 0,82 (mol/mol). Die Schmelzetemperatur war 10 - 20 °C höher als die Gehäusetemperatur. Die Treibmittel-Zufuhr fand über einen Maximator (Maximator GmbH, Deutschland) und/oder über eine Dosierstation (Lewa GmbH, Deutschland) an der Position 6 mit einem Gehalt von 1,2 bis 1,5 Gew.-% CO₂ statt. Die Druckprofile in der Doppelschnecke stiegen ab der Position 5 sukzessive von 45 bar bis zur Spitze des Extruders mit 310 bar an. Die Schmelze wurde über das Übergaberohr (290 °C) in die Einschnecke (Reifenhäuser) gefördert. Der Extruder wurde ebenfalls bei einer durchgehenden Gehäusetemperatur von 280 °C, einem Durchsatz von 35 kg/h und mit einer Drehzahl von 26 rpm betrieben. Der Schmelzedruck fiel über die Schnecke sukzessive bis zur Schmelzepumpe ab (von 250 auf 120 bar). Die Schmelzepumpe wurde druckgeregelt bei einem Staudruck von 110 bar und einer Temperatur von 280 °C betrieben. Der Druck nach der Schmelzepumpe lag bei diesem Prozess im Bereich 160 - 180 bar (Druck an der Lochplatte). Die Anfahrweiche und die Lochplatte waren ebenfalls auf eine Temperatur von 280 °C eingestellt und die Schmelzetemperatur lag bei (T_{g} + 140 °C) bis (T_{g} + 150 °C). Die UWG (EUP 50) sowie die Lochplatte wurden von der Firma ECON (Econ GmbH, Österreich) hergestellt. Die Lochplatte bestand aus 5 Einzellocheinsätzen mit einem Durchmesser von 2,2 mm und einer Bügellänge 3,49 mm. Die Verweilzeit der Schmelze zwischen Einzug und Austritt belief sich auf ca. 7-10 Minuten. Nach dem Austritt wurde die Schmelze mit einem rotierenden 6-fach Messer mit 1500 rpm abgetrennt und von 70 - 80 °C kaltem Wasserkreislauf (28 m³/h) abtransportiert. Die erhaltenen Partikel waren rundlich mit einer Schüttdichte von 150 - 180 g/L und ließen sich gut im Bereich von 8 - 10 bar verschweißen.
ii) Eine Doppelschnecke der Firma Reifenhäuser (Troisdorf, Deutschland) mit 43 D wurde mit einem Durchsatz von 17 kg/h, bei Profiltemperaturen von 160 - 240 °C (Positionen 1 bis 3), 260 - 270 °C (Position 4 und 5) bis 280 °C (Position 6 - 10) und einer Drehzahl von 86 rpm gefahren. Zusätzlich wurde der Kettenverlängerer 1 in hoher Konzentration von 1,5 Gew.-% zugesetzt. Das entspricht einem Reaktivgruppenverhältnis OH : Epoxy von 1 mol: 1,78 mol. Die Schmelzetemperatur war 10 - 20 °C höher als die Gehäusetemperatur. Die Treibmittel-Zufuhr fand über einen Maximator (Maximator GmbH, Deutschland) und/oder über eine Dosierstation (Lewa GmbH, Deutschland) an der Position 6 mit einem Gehalt von 2 bis 2,3 Gew.-% CO₂ statt. Die Druckprofile in der Doppelschnecke stiegen ab der Position 5 sukzessive von 67 bar bis zur Spitze des Extruders mit 250 bar an. Die Schmelze wurde über das Übergaberohr (290 °C) in die Einschnecke (Reifenhäuser) gefördert. Der Extruder wurde ebenfalls bei einer durchgehenden Gehäusetemperatur von 280 °C, einem Durchsatz von 17 kg/h und mit einer Drehzahl von 15 rpm betrieben. Der Schmelzedruck fiel über die Schnecke sukzessive bis zur Schmelzepumpe ab (von 250 auf 115 bar). Die Schmelzepumpe wurde druckgeregelt bei einem Staudruck von 110 bar und einer Temperatur von 280 °C gefahren. Der Druck nach der Schmelzepumpe lag bei diesem Prozess bei 230 bar (Druck an der Lochplatte). Die Anfahrweiche war ebenfalls auf eine Temperatur von 280 °C eingestellt und die Lochplatte auf 320 °C. Die Schmelzetemperatur lag bei (T_{g} + 150 °C) bis (T_{g} + 160 °C). Durch eine Überdosierung der Reaktivkomponente musste der Durchsatz deutlich verringert und die Lochplattentemperatur erhöht werden, um eine Notabschaltung wegen kritischem Anlagendruck zu verhindern. Die UWG (EUP 50) sowie die Lochplatte wurden von der Firma ECON (Econ GmbH, Österreich) hergestellt. Die Lochplatte bestand aus 5 Einzellocheinsätzen mit einem Durchmesser von 2,2 mm und einer Bügellänge von 15 mm. Die Verweilzeit der Schmelze zwischen Einzug und Austritt belief sich auf ca. 7-10 Minuten. Nach dem Austritt wurde die Schmelze mit einem rotierenden 6-fach Messer mit 1500 rpm abgetrennt und von 70 - 80 °C kaltem Wasserkreislauf (28 m³/h) abtransportiert. Der Herstellungsprozess war instabil und resultierte in kollabierten und verschrumpelten Partikeln (Schüttdichte > 500 g/L), die sich nicht verschweißen ließen.
iii) Eine Doppelschnecke der Firma Reifenhäuser (Troisdorf, Deutschland) mit 43 D wurde mit einem Durchsatz von 15 kg/h, bei Profiltemperaturen von 160 - 240 °C (Positionen 1 bis 3), 260 - 270 °C (Position 4 und 5) bis 280 °C (Position 6 - 10) und einer Drehzahl von 85 rpm gefahren. Diese Versuchsreihe wurde ohne Kettenverlängerer durchgeführt. Die Schmelzetemperatur war 10 - 20 °C höher als die Gehäusetemperatur. Die Gaszufuhr fand über Maximator (Maximator GmbH, Deutschland) und/oder über eine Dosierstation (Lewa GmbH, Deutschland) an der Position 6 mit einem Gehalt von 2 bis 2,3 Gew.-% CO₂ statt. Die Druckprofile in der Doppelschnecke stiegen ab der Position 5 sukzessive von 73 bar bis zur Spitze des Extruders mit 94 bar an. Die Schmelze wurde über das Übergaberohr (290 °C) in die Einschnecke (Reifenhäuser) gefördert. Der Extruder wurde ebenfalls bei einer durchgehenden Gehäusetemperatur von 280 °C, einem Durchsatz von 15 kg/h und mit einer Drehzahl von 15 rpm betrieben. Der Schmelzedruck fiel über die Schnecke sukzessive bis zur Schmelzepumpe ab (von 94 auf 87 bar). Die Schmelzepumpe wurde druckgeregelt bei einem Staudruck von 110 bar und einer Temperatur von 280 °C gefahren. Der Druck nach der Schmelzepumpe lag bei diesem Prozess bei 90 bar (Druck an der Lochplatte). Die Anfahrweiche und die Lochplatte waren auf eine Temperatur von 280 °C eingestellt und die Schmelzetemperatur lag bei (T_{g} + 140 °C) bis (T_{g} + 150 °C). Die Prozessführung wurde trotz der fehlenden Reaktivkomponente möglichst gleich zu ii) gehalten. Die UWG (EUP 50) sowie die Lochplatte wurden von der Firma ECON (Econ GmbH, Österreich) hergestellt. Die Lochplatte bestand aus 5 Einzellocheinsätzen mit einem Durchmesser von 2,2 mm und einer Bügellänge von 15 mm. Die Verweilzeit der Schmelze zwischen Einzug und Austritt belief sich auf ca. 7-10 Minuten. Nach dem Austritt wurde die Schmelze mit einem rotierenden 6-fach Messer mit 1500 rpm abgetrennt und von 70 - 80 °C kaltem Wasserkreislauf (28 m³/h) abtransportiert. Der Herstellungsprozess war unter gegebenen Bedingungen nicht möglich und resultierte in kaum expandierten runden Partikeln mit einer sehr hohen Dichte von 500 - 600 kg/m³. Diese ließen sich sehr schlecht bis gar nicht zu Bauteilen verschweißen.
iv) Eine Doppelschnecke der Firma Reifenhäuser (Troisdorf, Deutschland) mit 43 D wurde mit einem Durchsatz von 35 kg/h, bei Profiltemperaturen von 100 - 160 °C (Positionen 1 bis 3), 240 °C (Position 4) bis 280 °C (Position 5 - 10) und einer Drehzahl von 100 rpm gefahren. Zusätzlich wurde der Kettenverlängerer 1 in fester Konzentration von 0,7 Gew.-% zugesetzt. Bei dieser Reihe wurden durch einen unterschiedlichen Anteil eines zweiten Polycarbonats das molare Reaktivgruppenverhältnis OH : Epoxy variiert, und zwar zwischen 1 : 0,82 bis 1 :1,47 (OH : Epoxy, jeweils in mol) (Tab. 1). Die Schmelzetemperatur war 10 - 20 °C höher als die Gehäusetemperatur. Die Treibmittel-Zufuhr fand über einen Maximator (Maximator GmbH, Deutschland) und/oder über eine Dosierstation (Lewa GmbH, Deutschland) an der Position 6 mit einem Gehalt von 1,3 Gew.-% CO₂ statt. Die Druckprofile in der Doppelschnecke stiegen ab der Position 5 sukzessive von 45 bar bis zur Spitze des Extruders mit 270 bar für 100 Gew.-% SPC an. Durch Zugabe einer OH-Endgruppen armen PC-Komponente, PC-2, sind die Druckprofile zunächst geringfügig auf 275 bar bei einem Gehalt von 10% gestiegen. Eine weitere Zugabe OH-Endgruppen-armen PC-Komponente über 20 Gew.-% hinaus führte zu abfallenden Druckprofilen. Die Schmelze wurde über das Übergaberohr (290 °C) in die Einschnecke (Reifenhäuser) gefördert. Der Extruder wurde ebenfalls bei einer durchgehenden Gehäusetemperatur von 280 °C, einem Durchsatz von 35 kg/h und mit einer Drehzahl von 26 rpm betrieben. Die Schmelzepumpe wurde druckgeregelt bei einem Staudruck von 110 bar und einer Temperatur von 280 °C gefahren. Der Druck nach der Schmelzepumpe wurde durch den Gehalt des reaktiven Polycarbonats bestimmt und wurde durch den Fremdmatrixanteil reduziert (detailliert in Tab 1 dargestellt). Die Anfahrweiche und die Lochplatte waren ebenfalls auf eine Temperatur von 280 °C eingestellt und die Schmelzetemperatur lag bei T_{g} + 140 °C bis T_{g} + 150 °C. Die UWG (EUP 50) sowie die Lochplatte wurden von der Firma ECON (Econ GmbH, Österreich) hergestellt. Die Lochplatte bestand aus 5 Einzellocheinsätzen mit einem Durchmesser von 2,2 mm und einer Bügellänge 3,49 mm. Die Verweilzeit der Schmelze zwischen Einzug und Austritt belief sich auf ca. 7-10 Minuten. Nach dem Austritt wurde die Schmelze mit einem rotierenden 6-fach Messer mit 1500 rpm abgetrennt und von 70 - 80 °C kaltem Wasserkreislauf (28 m³/h) abtransportiert. Die Rundheit der Partikel nahm sukzessiv ab und die Schaumdichte zu.
   Bei einer zu geringen Konzentration des Polycarbonats an OH-Endgruppen, und zwar < 350 ppm, bricht der Herstellungsprozess mit einem molaren Reaktivgruppenverhältnis (OH : Epoxy, jeweils in mol) von 1 : 1,12 (außerhalb des Anspruchsbereiches) zusammen. Der Molekulargewichtsaufbau findet dabei nicht mehr im ausreichendem Maße statt, sodass die Viskositäten des Schmelzegemisches und damit die Drücke an der Lochplatte nicht mehr für einen homogenen Partikelschaum ausreichen. Die erhaltenen Partikel weisen dabei eine länglichere Form und eine Inhomogenität in Form und Aussehen auf (bedingt durch niedrigere Viskosität und damit veränderte Fließeigenschaften) bei höheren Schaumdichten (niedrigerer Druckabfall) (Tab. 2). Die Partikel lassen sich nicht mehr hinreichend gut im beanspruchten Druckbereich von 7 - 11 bar verschweißen. Die Bauteile haben keine geschlossene Oberfläche und viele Einfallstellen/Hohlräume, was in schlechterer Wärmeleitfähigkeit, erhöhter Steifigkeit, deutlich reduzierter maximaler Biegedehnung und schlechterer Durchstoß-Performance resultiert (Tab. 2 und Tab. 3).
v) Ein Doppelschneckenextruder vom Typ ZSK 26 MC der Firma Coperion mit 44 D wurde mit einem Durchsatz von 20 kg/h bei Gehäusetemperaturen von 280°C (ab der Aufschmelzzone) und einem Drehmoment von 60 % sowie einer Drehzahl von 230 rpm gefahren. Zusätzlich wurde der Kettenverlängerer 1 in geringen Konzentrationen von 0,9 Gew.-% zugesetzt. Das entspricht einem molaren Reaktivgruppenverhältnis OH : Epoxy von 1 : 0,9 - 1,1 für eine PC-Komponente in der Zusammensetzung mit einem besonders bevorzugten OH-EndgruppenGehalt von 450 bis 550 ppm und liegt somit im erfindungsgemäßen Bereich. In Gehäuse 7 von 10 der Doppelschnecke wurde über eine Gasdosierstation (Firma Promix Solutions GmbH, Deutschland) das Treibmittel CO₂ in Konzentrationen von 1,2 bis zu 1,5 Gew.-% eingebracht. Die Schmelzetemperatur des Gas-Polymer-Gemischs betrug 280°C (= T_{g} + 130°C). Das homogenisierte Gas-Polymer-Gemisch wurde in den statischen Mischer zwangsgefördert. Die Verweilzeit in diesem Mischer betrug 6-8 Minuten. Der Mischer wurde ebenfalls mit einer Profiltemperatur von 280°C betrieben. Am Ende des statischen Mischers regulierte eine Schmelzepumpe der Firma Maag-Germany GmbH den Rückstaudruck am Eingang der Schmelzepumpe auf 90 bar. Vor der Lochplatte lag ein Druck von 198 bar an. Die Schmelze wurde mit einer Unterwassergranulierung (Firma Gala) granuliert. Dabei wurde das Gas-Schmelzegemisch durch eine Lochplatte mit 2 Löchern in die Wasser-gefüllte Schneidkammer gedrückt. Der Lochdurchmesser der Löcher in der Lochplatte betrug 2,4 mm. In der Schneidkammer wurde die Schmelze von rotierenden Messern in Granulate geschnitten. Die Messerdrehzahl lag bei 3500 rpm. Durch den Druckabfall hinter der Lochplatte schäumten die Granulate auf. Auf das 80 - 90°C heiße Prozesswasser, das durch die Schneidkammer strömte, wurde ein Druck von 2 bar aufgebracht. Abschließend wurden die Granulate in einer Zentrifuge getrocknet und ausgeschieden. Die erhaltenen Partikel waren rund, hatten eine glatte, homogene Oberfläche bei einer Schüttdichte von 220 - 250 g/L und ließen sich sehr gut verschweißen.

### c) Prüfmethoden

Die hergestellten Partikel wurden durch einen Formteilautomat Teubert TVZ162/100PP (Teubert Maschinenbau GmbH, Deutschland) zu Bauteilen der Dichte 200 ± 10 kg/m³ und einer Geometrie von 300 × 200 × 15 mm³ verarbeitet. Der notwendige Druck für die Verschweißung lag für das EPC im Bereich von 7 bis 10 bar. Abschließend wurden die Eigenschaften der Bauteile bestimmt. Dabei wurden Rasterelektronen-Mikroskopie-Messungen (REM, Model: JEOL JSM-6510, Borken, Deutschland) mit Graphit-besputterten Proben zur Darstellung der Morphologie durchgeführt. Eine dynamisch-mechanische Analyse (DMA) wurde an einer Gabo Eplexor 500N der Firma NETZSCH GmbH, (Selb, Deutschland) im Druckmodus an 15 × 15 × 15 mm³ Proben im Temperaturbereich von -25 bis 250 °C bei einer Heizrate von 1 K/min im druckreguliertem Modus mit einer Amplitude von 5% (statisch) und 2% (dynamisch) der Probenhöhe mit einer Frequenz von 1 Hz durchgeführt. Die mechanische Charakterisierung wurde anhand von Druck-, Zug- und 3-Punktbiegung (Raumtemperatur, 80 und 110 °C) und Durchstoß-Versuchen (RT) durchgeführt. Druckversuche wurden nach der DIN EN ISO 844:2014-11 an einer Universalprüfmaschine Zwick Z020 der Firma Zwick & Roell (Ulm, Germany) an Proben mit einer Geometrie von 15 × 15 × 15 mm³ und bei einer 10 kN Kraftmessdose bis zu 60 % Kompression durchgeführt. Eine 3-Punktbiegung wurde basierend auf der ISO 1209-1:2007-05 mit gleicher Universalprüfmaschine bei 10 mm/min und einer Kraftmessdose von 20 kN durchgeführt. Die Proben wurden gehäutet, um den Einfluss der kompakten Randschicht auszublenden und die Geometrie auf 120 × 25 × 10 mm³ angepasst. Zugmessungen an den Bauteilen wurden nach der ISO 1926:2009 an einer Universalprüfmaschine Zwick Z050, (Zwick & Roell, Ulm, Deutschland) mit einer Probengeometrie von 140 (30+80+30) × 80 × 15 mm³ und einer 20 kN Kraftmessdose vorgenommen. Die Durchstoßcharakterisierung erfolgte mit einer Fallbolzen-Prüfmaschine Fractovis Plus der Firma Instron Ceast (Pianezza, Italien) mit einer Maximalenergie von 40 J und einer Durchstoßgeschwindigkeit von 4,4 m/s (angelehnt an die DIN EN ISO 6603-2:2002-04) mit einer Probengeometrie von 60 × 60 × 15 mm³. Alle mechanischen Charakterisierungen wurden bei Raumtemperatur, 80 °C und 110 °C durchgeführt, jeweils mit einem 10 min Zwischenschritt für Temperaturanpassung vor der Messung. Alle Bauteile wurden bei gleicher Dichte um die 200 kg/m³ untersucht. Wärmeleitfähigkeitsmessungen wurden an einem HFM 446 Lambda Messgerät der Firma NETZSCH (Selb, Deutschland) bei -10 °C, 10 °C, 25 °C, 50 °C und 70 °C durchgeführt.

Das mittlere Molekulargewicht **Mw** bei PC-1 und PC-2 wurde bestimmt mittels Gelpermeationschromatographie. Die Kalibrierung erfolgte gegen Bisphenol A-Polycarbonat-Standards unter Verwendung von Dichlormethan als Elutionsmittel. Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen.

Durchmesser der analytischen Säulen: 7,5 mm; Länge: 300 mm. Partikelgrößen des Säulenmaterials: 3 mm bis 20 mm. Konzentration der Lösungen: 0,2 Gew.-%. Flussrate: 1,0 ml/min, Temperatur der Lösungen: 30°C. Injektvolumen; 100 ml. Detektion mittels UV-Detektor. Bei dem durch Molmassenaufbau, über Zugabe eine Kettenverlängerers, entstandenen hochverzweigten Polycarbonat erfolgte die Bestimmung mittels GPC-MALLS, wie weiter vorne beschrieben. Dabei konnten nicht alle hochverzweigte / teilvernetzte Fraktionen in Lösung gebracht werden (XYZ% unlöslich), sodass besonders hochmolekulargewichtige Fraktionen nicht mit bestehenden Analysemöglichkeiten charakterisiert werden können. Dieses ist ein dem Fachmann bekanntes Problem, so dass die Bestimmungsgenauigkeit der Molmasse bei hochverzweigten Polymeren in ihrer Genauigkeit begrenzt ist. Die zuvor genannten Molmassenbereiche beziehen sich entsprechend auf die in Dichlormethan löslichen Anteile.

Die **OH-Zahl** der Polymere wurde mittels ¹H-NMR-Spektroskopie mit Dichlormethan als Lösungsmittel bei Raumtemperatur unter Auswertung des Verhältnisses der Integrale der Signale bei 6,68 ppm (2 aromatische Protonen ortho-ständig zu phenolischen-OH Gruppen) und bei 1,68 ppm (6 Methylprotonen der Bisphenol-A Einheit) ermittelt.

### 2. Ergebnisse

### Zusammensetzungen und Analytik

**Tab. 1: Detaillierte Zusammensetzungen und analytische Ergebnisse zu der Studie des molaren Verhältnisses nach Beispiel iv)**

| | **E-1** | **E-2** | **E-3** | **V-4** | **V-5** | **V-6** |
|---|---|---|---|---|---|---|
| **PC1 [Gew.-%]** | 99,3 | 89,3 | 79,3 | 69,3 | 59,3 | 49,3 |
| **PC2 [Gew.-%]** | 0 | 10 | 20 | 30 | 40 | 50 |
| **Durchsatz PC1 [g/h]** | 34760 | 31280 | 27810 | 24330 | 20806 | 17380 |
| **Druck Ende A-Extruder [bar]** | 270 | 275 | 250 | 288 | 189 | 176 |
| **Druck an Lochplatte [bar]** | 190 | 184 | 177 | 170 | 134 | 122 |
| **OH-Gruppengehalt, bezogen auf das Gesamtgewicht des aromatischen Polycarbonats [ppm]** | 470 | 429 | 387 | 346 | 305 | 264 |
| **Molares Verhältnis der reaktiven OH-Gruppe (PC) zur reaktiven Gruppe des Kettenverlängerers (1: x)** | 0,82 | 0,90 | 1,00 | 1,12 | 1,27 | 1,47 |
| **M_{w} aus GPC [g/mol]** | 50180 | 52870 | 95690 | 93175 | 71691 | 50210 |
| **M_{w} aus GPC-MALLS [kDA]** | 158 | 168 | 206 | 207 | 139 | 107 |
| **Partikeldichte [kg/m³]** | 197 | 234 | 265 | 271 | 260 | 253 |
| **Mittlerer Zelldurchmesser [µm]** | 100 ± 47 | 129 ± 77 | 139 ± 66 | 193 ± 99 | 193 ± 11 7 | 206 ± 13 4 |
| **Zelldichte [Zellen/cm³]** | 8,88·10⁵ | 4,12·10⁵ | 3,48·10⁵ | 1,47·10⁵ | 1,33·10⁵ | 1,18·10⁵ |
| **Zellkoaleszenz** | Nein | Nein | Nein | Ja | Ja | Ja |

**Tab. 2: Detaillierte Kennwerte der Druckprüfungen, Biegeprüfungen und Durchstoß-Versuche für die Vergleichsstudie im Beispiel iv) der EPC-Partikelschaumbauteile**

| | **EPC (E-1)** | **EPC (V-4)** |
|---|---|---|
| **Bauteildichte [kg/m³]** | 200 ± 10 | 230 ± 15 |
| **Druckmodul [MPa]** | 54,7 ± 5 | 50,9 ± 5,2 |
| **Druckfestigkeit bei 10 % Kompression [MPa]** | 1,61 ± 0,12 | 1,90 ± 0,14 |

| | **EPC (E-1)** | **EPC (V-4)** |
|---|---|---|
| **Biegemodul [MPa]** | 59,1 ± 11,4 | 86 ± 6,4 |
| **Biegefestigkeit [MPa]** | 2,2 ± 0,3 | 2,52 ± 0,30 |
| **Maximale Biegedehnung [%]** | 8,8 ± 1,1 | 5,1 ± 0,7 |

| | **EPC (E-1)** | **EPC (V-4)** |
|---|---|---|
| **Maximale Kraft [N]** | 1688 ± 27 | 936 ± 107 |
| **Durchstoßkraft [N]** | 844 ± 29 | 467 ± 53 |
| **Gesamtenergie [J]** | 21,2 ± 3 | 12,2 ± 2 |
| **Gesamtdeformation [mm]** | 33,9 | 28,4 ± 7 |

| | | |
|---|---|---|
| *Notiz: Bauteil aus EPC (V-4) hat eine Schaumdichte von 230 kg*/*m³*. *Die Kennwerte sind hier original und müssten mit einen Faktor 0,85 für einfache %-uelle Normierung verrechnet werden.* | | |

**Tab. 3: Vollständige Daten für die Wärmeleitfähigkeit von EPC (E1) und (V4).**

| | **Wärmeleitfähigkeit** / **mW/(m·K)** | | | | | |
|---|---|---|---|---|---|---|
| | **Polymermatrix PC-1** | **-10 °C** | **10 °C** | **25 °C** | **50 °C** | **70 °C** |
| **EPC (E-1) 200 kg/m³** | 200^{#} | 44.0 | 46.2 | 47.9 | 50.7 | 52,7 |
| **EPC (V-4) 230 kg/m³** | 200^{#} | 46.2 | 48.8 | 50.7 | 53.7 | 55.6 |

| | | | | | | |
|---|---|---|---|---|---|---|
| ^{#} Wärmeleitfähigkeitsangaben des nicht expandierten Ausgangsmaterials | | | | | | |

## Patentansprüche

1. Verfahren zur Herstellung von geschäumten Polycarbonat-Beads, umfassend die folgenden Schritte:
a) Bereitstellen einer auf aromatischem Polycarbonat basierenden Zusammensetzung, wobei das aromatische Polycarbonat, bezogen auf das Gesamtgewicht des aromatischen Polycarbonats, einen Gehalt an OH-Endgruppen von mindestens 350 ppm, bestimmt mittels ¹H-NMR-Spektroskopie mit Dichlormethan als Lösungsmittel bei Raumtemperatur, aufweist,
b) Vermischen der auf aromatischem Polycarbonat basierenden Zusammensetzung mit einem für OH-Gruppen geeigneten Kettenverlängerer in einem solchen molaren Verhältnis, dass auf 1 mol OH-Endgruppen des Polycarbonats 0,64-1,10 mol der reaktiven Gruppe des Kettenverlängerers eingesetzt werden,
c) Bereitstellen der Mischung in plastifiziertem Zustand,
d) Einmischen eines physikalischen Treibmittels in die Schmelze,
e) Partikel-Schaumextrusion der plastifizierten Mischung bei einer Temperatur T von T₁ = (T_{g} + 110°C) bis T₂ = (T_{g} + 170°C), wobei T_{g} die Glasübergangstemperatur der auf aromatischem Polycarbonat basierenden Zusammensetzung ist, wobei die Glasübergangstemperatur nach DIN EN ISO 11357-1:2017 mittels Dynamischer Differenzkalorimetrie bestimmt wird,
f) Granulierung der Treibmittel-haltigen Schmelze.

2. Verfahren nach Anspruch 1, wobei Kohlenstoffdioxid als Treibmittel verwendet wird.

3. Verfahren nach Anspruch 1 oder 2, wobei das Verfahren als kontinuierlicher Prozess geführt wird.

4. Verfahren nach einem der vorhergehenden Ansprüche, wobei die auf aromatischem Polycarbonat basierende Zusammensetzung aus Schritt a eine Schmelzevolumenfließrate MVR von bis zu 12 cm³/(10 min), bestimmt nach ISO 1133:2012-3 (Prüftemperatur 300°C, Masse 1,2 kg), aufweist.

5. Verfahren nach einem der vorhergehenden Ansprüche, wobei die Granulierung als eine Granulierung in flüssigem Medium, als Heißabschlag oder als Unter-Luft-Granulierung erfolgt.

6. Verfahren nach einem der vorhergehenden Ansprüche, wobei die Granulierung als UnterwasserGranulierung ohne Druckbeaufschlagung erfolgt.

7. Verfahren nach einem der vorhergehenden Ansprüche, wobei als Kettenverlängerer ein oder mehrere epoxyfunktionalisierte Verbindungen eingesetzt werden.

8. Verfahren nach einem der vorhergehenden Ansprüche, wobei 0,1 - 2,3 Gew.-% physikalisches Treibmittel in Schritt d zugemischt werden, wobei sich die Mengenangabe auf das Gesamtgewicht von auf aromatischem Polycarbonat basierter Zusammensetzung und Kettenverlängerer bezieht.

9. Verfahren nach einem der vorhergehenden Ansprüche, wobei das aromatische Polycarbonat der Zusammensetzung aus Schritt a, bezogen auf das Gesamtgewicht des aromatischen Polycarbonats, einen Gehalt an OH-Endgruppen von 350 bis 600 ppm, bestimmt mittels ¹H-NMR-Spektroskopie mit Dichlormethan als Lösungsmittel bei Raumtemperatur, aufweist,

10. Verfahren nach einem der vorhergehenden Ansprüche, wobei das aromatische Polycarbonat der Zusammensetzung aus Schritt a, bezogen auf das Gesamtgewicht des aromatischen Polycarbonats, einen Gehalt an OH-Endgruppen von mindestens 380 ppm, bestimmt mittels ¹H-NMR-Spektroskopie mit Dichlormethan als Lösungsmittel bei Raumtemperatur, aufweist.

11. Verfahren nach einem der vorhergehenden Ansprüche, wobei Schritt b und Schritt d zeitlich überlappend erfolgen.

12. Verfahren nach einem der Ansprüche 1 bis 10, wobei die Schritte a bis f in der genannten Reihenfolge stattfinden.

13. Verfahren nach einem der vorhergehenden Ansprüche, wobei als Kettenverlängerer ein epoxyfunktionalisierter Kettenverlängerer mit einem Epoxy-Äquivalentgewicht von 285 bis 485 g/mol eingesetzt wird.

14. Polycarbonat-Beads, hergestellt nach dem Verfahren gemäß einem der vorhergehenden Ansprüche.

15. Verfahren zur Herstellung von Formteilen aus den Polycarbonat-Beads gemäß Anspruch 14, wobei die Crackspaltmethode oder die Druckfüllmethode genutzt werden.

## Claims

1. Process for producing foamed polycarbonate beads, comprising the following steps:
a) providing an aromatic polycarbonate-based composition, where the aromatic polycarbonate, based on the total weight of the aromatic polycarbonate, has a content of OH end groups of at least 350 ppm, determined by ¹H NMR spectroscopy with dichloromethane as solvent at room temperature,
b) mixing the aromatic polycarbonate-based composition with a chain extender suitable for OH groups in such a molar ratio that 0.64-1.10 mol of the reactive group of the chain extender is used per 1 mol of OH end groups of the polycarbonate,
c) providing the mixture in a plastified state,
d) mixing a physical blowing agent into the melt,
e) particle foam extrusion of the plastified mixture at a temperature T of T₁ = (T_{g} + 110°C) to T₂ = (T_{g} + 170°C), where T_{g} is the glass transition temperature of the aromatic polycarbonate-based composition, where the glass transition temperature is determined by dynamic differential calorimetry according to DIN EN ISO 11357-1:2017,
f) pelletizing the blowing agent-containing melt.

2. Process according to Claim 1, wherein carbon dioxide is used as blowing agent.

3. Process according to Claim 1 or 2, wherein the process is performed as a continuous operation.

4. Process according to any of the preceding claims, wherein the aromatic polycarbonate-based composition from step a has a melt volume flow rate MVR of up to 12 cm³/(10 min), determined in accordance with ISO 1133:2012-3 (test temperature 300°C, mass 1.2 kg).

5. Process according to any of the preceding claims, wherein the pelletization is a pelletization in liquid medium, by hot chopping or an under-air pelletization.

6. Process according to any of the preceding claims, wherein the pelletization is an unpressurized underwater pelletization.

7. Process according to any of the preceding claims, wherein the chain extender used is one or more epoxy-functionalized compounds.

8. Process according to any of the preceding claims, wherein 0.1-2.3% by weight of physical blowing agent is added in step d, where the stated amount is based on the total weight of aromatic polycarbonate-based composition and chain extender.

9. Process according to any of the preceding claims, wherein the aromatic polycarbonate in the composition from step a, based on the total weight of the aromatic polycarbonate, has a content of OH end groups of 350 to 600 ppm, determined by ¹H NMR spectroscopy with dichloromethane as solvent at room temperature.

10. Process according to any of the preceding claims, wherein the aromatic polycarbonate in the composition from step a, based on the total weight of the aromatic polycarbonate, has a content of OH end groups of at least 380 ppm, determined by ¹H NMR spectroscopy with dichloromethane as solvent at room temperature.

11. Process according to any of the preceding claims, wherein step b and step d overlap in time.

12. Process according to any of Claims 1 to 10, wherein steps a to f take place in the sequence stated.

13. Process according to any of the preceding claims, wherein the chain extender used is an epoxy-functionalized chain extender with an epoxy equivalent weight of 285 to 485 g/mol.

14. Polycarbonate beads produced by the method according to any of the preceding claims.

15. Process for producing moulded articles from the polycarbonate beads according to Claim 14, wherein the crack gap method or the pressure filling method is utilized.

## Revendications

1. Procédé de fabrication de billes de polycarbonate expansées, comprenant les étapes suivantes :
a) la fourniture d'une composition à base de polycarbonate aromatique, le polycarbonate aromatique présentant, par rapport au poids total du polycarbonate aromatique, une teneur en groupes terminaux OH d'au moins 350 ppm, déterminée par spectroscopie RMN ¹H avec du dichlorométhane comme solvant à température ambiante,
b) le mélange de la composition à base de polycarbonate aromatique avec un agent d'allongement de chaîne adapté aux groupes OH dans un rapport molaire tel que 0,64 à 1,10 mole du groupe réactif de l'agent d'allongement de chaîne soit utilisée pour 1 mole de groupes terminaux OH du polycarbonate,
c) la fourniture du mélange à l'état plastifié,
d) l'incorporation d'un agent gonflant physique dans la masse fondue,
e) l'extrusion de mousse particulaire du mélange plastifié à une température T de T₁ = (T_{g} + 110°C) à T₂ = (T_{g} + 170°C), où T_{g} est la température de transition vitreuse de la composition à base de polycarbonate aromatique, la température de transition vitreuse étant déterminée selon la norme DIN EN ISO 11357-1:2017 par calorimétrie différentielle dynamique,
f) la granulation de la masse fondue contenant l'agent gonflant.

2. Procédé selon la revendication 1, du dioxyde de carbone étant utilisé comme agent gonflant.

3. Procédé selon la revendication 1 ou 2, le procédé étant mis en œuvre sous forme de processus continu.

4. Procédé selon l'une quelconque des revendications précédentes, la composition à base de polycarbonate aromatique de l'étape a présentant un indice de fluidité volumique à l'état fondu MVR allant jusqu'à 12 cm³/(10 min), déterminé selon la norme ISO 1133:2012-3 (température d'essai 300 °C, masse 1,2 kg).

5. Procédé selon l'une quelconque des revendications précédentes, la granulation s'effectuant sous la forme d'une granulation en milieu liquide, sous forme de coupe à chaud ou sous forme de granulation sous air.

6. Procédé selon l'une quelconque des revendications précédentes, la granulation s'effectuant sous forme de granulation sous l'eau sans mise sous pression.

7. Procédé selon l'une quelconque des revendications précédentes, un ou plusieurs composés à fonction époxy étant utilisés comme agent d'allongement de chaîne.

8. Procédé selon l'une quelconque des revendications précédentes, 0,1 à 2,3 % en poids d'agent gonflant physique étant ajoutés à l'étape d, la quantité indiquée se rapportant au poids total de composition à base de polycarbonate aromatique et d'agent d'allongement de chaîne.

9. Procédé selon l'une quelconque des revendications précédentes, le polycarbonate aromatique de la composition de l'étape a présentant, par rapport au poids total du polycarbonate aromatique, une teneur en groupes terminaux OH de 350 à 600 ppm, déterminée par spectroscopie RMN ¹H avec du dichlorométhane comme solvant à température ambiante.

10. Procédé selon l'une quelconque des revendications précédentes, le polycarbonate aromatique de la composition de l'étape a présentant, par rapport au poids total du polycarbonate aromatique, une teneur en groupes terminaux OH d'au moins 380 ppm, déterminée par spectroscopie RMN ¹H avec du dichlorométhane comme solvant à température ambiante.

11. Procédé selon l'une quelconque des revendications précédentes, l'étape b et l'étape d se chevauchant dans le temps.

12. Procédé selon une quelconque des revendications 1 à 10, les étapes a à f se déroulant dans l'ordre indiqué.

13. Procédé selon l'une quelconque des revendications précédentes, un agent d'allongement de chaîne à fonction époxy ayant un poids équivalent d'époxy de 285 à 485 g/mol étant utilisé comme agent d'allongement de chaîne.

14. Billes de polycarbonate, fabriquées par le procédé selon l'une quelconque des revendications précédentes.

15. Procédé de fabrication de pièces moulées à partir des billes de polycarbonate selon la revendication 14, la méthode de fissuration ou la méthode de remplissage sous pression étant utilisée.
